# EUROPEAN PATENT SPECIFICATION

(11) **EP 4 280 090 B1**
(45) Date of publication and mention of the grant of the patent: **09.09.2026**
(21) Application number: 22774160.0
(22) Date of filing: 21.03.2022
(51) Int. Cl.: G06F 21/53, G06F 21/55, G06F 21/60

(54) **ACCESS CONTROL METHOD, ELECTRONIC DEVICE, AND SYSTEM**
ZUGANGSSTEUERUNGSVERFAHREN, ELEKTRONISCHE VORRICHTUNG UND SYSTEM
PROCÉDÉ DE CONTRÔLE D'ACCÈS, DISPOSITIF ÉLECTRONIQUE ET SYSTÈME

(30) Priority: 23.03.2021 CN 202110307174; 09.07.2021 CN 202110774899
(43) Date of publication of application: 22.11.2023
(73) Proprietor: Huawei Technologies Co., Ltd., Shenzhen, Guangdong 518129 (CN)
(72) Inventor: REN, Bingfei, Shenzhen, Guangdong 518129 (CN); MAO, Zhewen, Shenzhen, Guangdong 518129 (CN)
(74) Representative: Isarpatent
(86) International application number: PCT/CN2022/081882
(87) International publication number: WO 2022/199499

(56) References cited:
- EP-A1- 3 543 853
- CN-A- 107 102 888
- CN-A- 108 763 921
- CN-A- 108 932 427
- US-A1- 2012 297 492
- US-A1- 2020 028 848
- US-A1- 2021 014 683

## Description

### TECHNICAL FIELD

This disclosure generally relates to the field of computer technologies, and the invention in particular relates to an access control method, an electronic device, a system, and a computer-readable storage medium.

### BACKGROUND

An application (application, APP) in a terminal operating system (operating system, OS) can apply to a user for access authorization of a sensitive resource in the form of an independent subject, and provide a corresponding service for the user after the user authorized the access. When an APP calls a service of another APP, the callee APP may provide a service for the caller APP. If the callee APP is called by different caller APPs, the callee APP stores data generated by the different callers, and the callee APP can randomly access the data generated by the plurality of different callers, so that data security of the caller APP cannot be ensured.

US 2020/028848 A1 addresses the technical problem of the inefficiency and security challenges associated with securely accessing multiple instances of applications in a shared, multiuser, multi-tenant computing environment. It is described that legacy techniques for securely accessing multiple application instances involve generating unique self-signed digital certificates for each user of each application, which can be resource-intensive and inefficient, especially in large-scale, highly dynamic distributed systems. This leads to heavy resource consumption because generating unique self-signed digital certificates for each user of each application consumes significant resources and poses security and inefficiency problems. This document suggest a solution for such problems by implementing a reverse proxy authorization service that uses a single application digital certificate for all instances of a particular application.

US 2021/014683 addresses the technical problem of ensuring secure communication between remote devices, particularly in the context of user equipment (UE) and remote systems. It is described that traditional encryption methods, while useful, have limitations in protecting data from eavesdropping and ensuring that both ends of a communication link are operating in secure environments. It is stated that encryption alone does not prevent spying when the computer system itself is compromised, nor does it ensure that a third-party system is secure. The document proposes a method involving the use of isolated Virtual Machine (VM) instances to enhance security for both ends of the communication link. Especially, when a communication request is received, the UE instantiates a VM instance specifically for processing the communication request. This VM instance is then isolated from other applications on the device, thereby preventing eavesdropping by other applications. A root certificate is generated for the VM instance, which serves as a unique identifier and attestation of the VM's secure environment. The UE transmits the root certificate to an attestation server to attest to the secure execution of the application within the VM instance. This attestation process ensures that the communication is taking place within a secure environment on the UE.

The technical problem addressed in EP3543853A1 is the synchronization of distributed microservice registries. In a microservice architecture, multiple instances of microservices are often deployed across different geographic locations to ensure high availability and low latency. These instances need to communicate with each other and with other applications, which is managed by microservice registries. However, the problem is how to ensure that all distributed microservice registries use the same underlying data and remain synchronized is challenging. The document suggests a solution for this problem essentially by storing the microservice registry in a distributed ledger. The distributed ledger then uses a consensus mechanism to ensure that all copies of the ledger are synchronized and match each other, even in cases of delayed communication between nodes. This consensus mechanism ensures that updates to the ledger are consistent and that all nodes have the same version of the data.

### SUMMARY

The object of the present invention is to provide an access control method, a related electronic device, a related system, and a computer-readable storage system to resolve a problem that data of each caller in a callee is abused, misused, or leaked, and ensure data security of different callers.

This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides an access control method, where the method is applied to a communication system, and the communication system includes a first device, a second device, and a third device. A first caller is installed in the first device, a callee is installed in the second device, and a second caller is installed in the third device. The first caller, the callee, and the second caller are applications or functional components, the application is a program entity implementing a plurality of functions, and the functional component is a program entity implementing a single function.

The method includes: The first device sends a first request to the second device, where the first request carries the first caller, the callee, and indication information of a first service; the second device runs, in response to the first request, a first instance in a first sandbox, where the first instance is an instance of the callee, and the first instance is configured to provide the first service for the first caller; the third device sends a second request to the second device, where the second request carries the second caller, the callee, and indication information of a second service; and the second device runs, in response to the second request, a second instance in a second sandbox, where the second instance is an instance of the callee, the second instance is configured to provide the second service to the second caller, and the second sandbox is different from the first sandbox.

According to the method in the first aspect, when providing services for different callers, the callee can run different instances in different sandboxes. For example, the callee on the second device can run the first instance in the first sandbox to provide the first service for the first caller on the first device, and the callee on the second device can run the second instance in the second sandbox to provide the second service for the second caller on the third device. Data isolation is maintained between different sandboxes. This can effectively reduce risks that data of each caller is abused, confused, misused, or leaked, and ensure data security.

According to the invention, the method further includes: The first device initiates a third request to the second device, where the third request carries the first caller, the callee, and indication information of a third service; and the second device runs, in response to the third request, the first instance in the first sandbox, where the first instance is further configured to provide the third service for the first caller; or the second device runs, in response to the third request, a third instance in the first sandbox, where the third instance is configured to provide the third service for the first caller.

With reference to the first aspect, in some embodiments, the method may further include: The first device initiates a fourth request to the second device, where the fourth request carries a third caller, the callee, and indication information of a fourth service, the third caller is installed in the first device, and the third caller is an application APP or a functional component; and the second device runs, in response to the fourth request, the first instance in the first sandbox, where the first instance is further configured to provide the fourth service for the third caller; or the second device runs, in response to the fourth request, the third instance in the first sandbox, where the third instance is configured to provide the fourth service for the third caller.

With reference to the first aspect, in some embodiments, the method may further include: A fourth device initiates a fifth request to the second device, where the fifth request carries the first caller, the callee, and indication information of a fifth service, and the first caller is installed in the fourth device; and the second device runs, in response to the fifth request, the first instance in the first sandbox, where the first instance is further configured to provide the fifth service for the first caller of the fourth device, or the second device runs, in response to the fifth request, the third instance in the first sandbox, where the third instance is configured to provide the fourth service for the third caller.

With reference to the first aspect, in some embodiments, the method may further include: the first caller and the second caller are the same.

With reference to the first aspect, in some embodiments, the method may further include: the first device and the third device are the same device.

With reference to the first aspect, in some not-claimed embodiments, before that the second device runs a first instance, the method further includes: The second device detects whether the first sandbox exists, and the second device creates the first sandbox if the first sandbox does not exist. Before that the second device runs a second instance, the method further includes: The second device detects whether the second sandbox exists, and the second device creates the second sandbox if the second sandbox does not exist.

With reference to the first aspect, in some not-claimed embodiments, that the second device runs the first instance in the first sandbox includes: The second device creates the first instance, and runs the first instance in the first sandbox.

That the second device runs the second instance in the second sandbox includes: The second device creates the second instance, and runs the second instance in the second sandbox.

With reference to the first aspect, in some not-claimed embodiments, the method may further include: The second device stores a first calling relationship in the second device after creating the first instance, where the first calling relationship includes information about the first caller, information about the first instance, and an identifier of the first calling relationship; and the second device stores a second calling relationship in the second device after creating the second instance, where the second calling relationship includes information about the second caller, information about the second instance, and an identifier of the second calling relationship.

With reference to the first aspect, in some not-claimed embodiments, after that the first device sends a first request to the second device, the method further includes: The first device stores the first calling relationship; and after that the third device sends a second request to the second device, the method further includes: The third device stores the second calling relationship.

With reference to the first aspect, in some not-claimed embodiments, the information about the first caller includes one or more of the following: an application identifier of the first caller, a user identifier UID of the first caller, a developer signature of the first caller, an account identifier of the first device in which the first caller is located, an identifier of the first device, and an identifier of the communication system in which the first caller is located. The information about the first instance includes a process identifier first PID of the first instance and a user identifier first UID of the first instance. The method further includes: The second device assigns the first PID or the first UID to the first instance when the second device creates the first instance.

With reference to the first aspect, in some not-claimed embodiments, the information about the first instance further includes one or more of the following: an application identifier of the callee, a user identifier UID of the callee, a developer signature of the callee, an account identifier of the second device in which the callee is located, an identifier of the second device, and the identifier of the communication system in which the first instance is located.

With reference to the first aspect, in some not-claimed embodiments, the method may further include: the first request further carries the identifier of the first device and the identifier of the second device.

With reference to the first aspect, in some not-claimed embodiments, after that the second device runs a first instance, the method further includes: The second device generates a first result; the second device returns the first result to the first device; and the first device runs the first caller to process the first result.

With reference to the first aspect, in some not-claimed embodiments, before that the second device runs a first instance, the method further includes: The second device determines that the first caller has permission to access the first instance.

With reference to the first aspect, in some not-claimed embodiments, before that the second device runs a first instance, the method further includes: The second device determines that the first caller has permission to request the callee to provide the first service.

With reference to the first aspect, in some not-claimed embodiments, before that the first device sends a first request to the second device, the method further includes: The first device determines that the first caller has permission to access the callee.

With reference to the first aspect, in some embodiments, the first device, the second device, and the third device are the same device.

With reference to the first aspect, in some not-claimed embodiments, the second device stores a mapping relationship between the first sandbox and the first caller, and the second device stores a mapping relationship between the second sandbox and the second caller.

According to a second aspect according to the invention, the invention further provides an access control method, where the method is applied to a second device, the second device is located in a communication system, and the communication system includes a first device, the second device, and a third device. A first caller is installed in the first device, a callee is installed in the second device, and a second caller is installed in the third device. The first caller, the callee, and the second caller are applications or functional components, the application is a program entity implementing a plurality of functions, and the functional component is a program entity implementing a single function.

The method includes: The second device receives a first request sent by the first device, where the first request carries the first caller, the callee, and indication information of a first service; the second device runs, in response to the first request, a first instance in a first sandbox, where the first instance is an instance of the callee, and the first instance is configured to provide the first service for the first caller; the second device receives a second request sent by the third device, where the second request carries the second caller, the callee, and indication information of a second service; and the second device runs, in response to the second request, a second instance in a second sandbox, where the second instance is an instance of the callee, the second instance is configured to provide the second service to the second caller, and the second sandbox is different from the first sandbox.

According to the method in the second aspect, when providing services for different callers, the callee can run different instances in different sandboxes. For example, the callee on the second device can run the first instance in the first sandbox to provide the first service for the first caller on the first device, and the callee on the second device can run the second instance in the second sandbox to provide the second service for the second caller on the third device. Data isolation is maintained between different sandboxes. This can effectively reduce risks that data of each caller is abused, confused, misused, or leaked, and ensure data security.

According to the invention, the method further includes: The second device receives a third request sent by the first device, where the third request carries the first caller, the callee, and indication information of a third service; and the second device runs, in response to the third request, the first instance in the first sandbox, where the first instance is further configured to provide the third service for the first caller; or the second device runs, in response to the third request, a third instance in the first sandbox, where the third instance is configured to provide the third service for the first caller.

With reference to the second aspect, in some embodiments, the method further includes: The second device receives a fourth request sent by the first device, where the fourth request carries a third caller, the callee, and indication information of a fourth service, the third caller is installed in the first device, and the third caller is an application APP or a functional component; and the second device runs, in response to the fourth request, the first instance in the first sandbox, where the first instance is further configured to provide the fourth service for the third caller; or the second device runs, in response to the fourth request, the third instance in the first sandbox, where the third instance is configured to provide the fourth service for the third caller.

With reference to the second aspect, in some embodiments, the method further includes: The second device receives a fifth request sent by a fourth device, where the fifth request carries the first caller, the callee, and indication information of a fifth service, and the first caller is installed in the fourth device; and the second device runs, in response to the fifth request, the first instance in the first sandbox, where the first instance is further configured to provide the fifth service for the first caller of the fourth device, or the second device runs, in response to the fifth request, the third instance in the first sandbox, where the third instance is configured to provide the fourth service for the third caller.

With reference to the second aspect, in some embodiments, the first caller and the second caller are the same.

With reference to the second aspect, in some embodiments, the first device and the third device are the same device.

With reference to the second aspect, in some not-claimed embodiments, before that the second device runs a first instance, the method further includes: The second device detects whether the first sandbox exists, and the second device creates the first sandbox if the first sandbox does not exist. Before that the second device runs a second instance, the method further includes: The second device detects whether the second sandbox exists, and the second device creates the second sandbox if the second sandbox does not exist.

With reference to the second aspect, in some not-claimed embodiments, that the second device runs the first instance in the first sandbox includes: The second device creates the first instance, and runs the first instance in the first sandbox.

That the second device runs the second instance in the second sandbox includes: The second device creates the second instance, and runs the second instance in the second sandbox.

With reference to the second aspect, in some not-claimed embodiments, the second device stores a first calling relationship in the second device after creating the first instance, where the first calling relationship includes information about the first caller, information about the first instance, and an identifier of the first calling relationship; and the second device stores a second calling relationship in the second device after creating the second instance, where the second calling relationship includes information about the second caller, information about the second instance, and an identifier of the second calling relationship.

With reference to the second aspect, in some not-claimed embodiments, the information about the first caller includes one or more of the following: an application identifier of the first caller, a user identifier UID of the first caller, a developer signature of the first caller, an account identifier of the first device in which the first caller is located, an identifier of the first device, and an identifier of the communication system in which the first caller is located. The information about the first instance includes a process identifier first PID of the first instance and a user identifier first UID of the first instance. The method further includes: The second device assigns the first PID or the first UID to the first instance when the second device creates the first instance.

With reference to the second aspect, in some not-claimed embodiments, the information about the first instance further includes one or more of the following: an application identifier of the callee, a user identifier UID of the callee, a developer signature of the callee, an account identifier of the second device in which the callee is located, an identifier of the second device, and the identifier of the communication system in which the first instance is located.

With reference to the second aspect, in some embodiments, the first request further carries the identifier of the first device and the identifier of the second device.

With reference to the second aspect, in some not-claimed embodiments, after that the second device runs a first instance, the method further includes: The second device generates a first result; and the second device returns the first result to the first device, where the first result is for processing by the first caller run by the first device.

With reference to the second aspect, in some not-claimed embodiments, before that the second device runs a first instance, the method further includes: The second device determines that the first caller has permission to access the first instance.

With reference to the second aspect, in some not-claimed embodiments, before that the second device runs a first instance, the method further includes: The second device determines that the first caller has permission to request the callee to provide the first service.

With reference to the second aspect, in some not-claimed embodiments, the first device, the second device, and the third device are the same device.

With reference to the second aspect, in some not-claimed embodiments, the second device stores a mapping relationship between the first sandbox and the first caller and a mapping relationship between the second sandbox and the second caller.

According to a third aspect according to the invention, the invention also provides an electronic device. The electronic device may include a communication apparatus, a memory, a processor coupled to the memory, a plurality of applications, and one or more programs. The memory stores computer executable instructions. When the processor executes the instructions, the electronic device is enabled to implement any function of the second device in the second aspect.

According to a fourth aspect according to the invention, the invention further provides a communication system. The communication system may include the first device, the second device, the third device, and the like described in the foregoing aspects. It may be understood that, based on a same inventive idea, for steps performed by the first device, the second device, and the third device in the communication system in the fourth aspect, refer to the steps performed by the first device, the second device, and the third device in the method in the first aspect when implementing corresponding functions, or for steps performed by the second device, refer to the steps performed by the second device in the method in the second aspect when implementing corresponding functions. Details are not described herein again.

According to a fifth aspect according to the invention, the invention provides a computer storage medium. The storage medium stores a computer program, the computer program includes executable instructions, and when the executable instructions are executed by a processor, the processor is enabled to perform an operation corresponding to the method provided in the second aspect.

According to a sixth aspect, a not-claimed embodiment of this application provides a computer program product. When the computer program product is run on an electronic device, the electronic device is enabled to perform any possible implementation of the second aspect.

According to a seventh aspect, a not-claimed embodiment of this application provides a chip system. The chip system may be used in an electronic device, the chip includes one or more processors, and the processor is configured to invoke computer instructions, so that the electronic device implements any possible implementation of the second aspect.

According to the foregoing method provided in this application, a same callee can start a plurality of sandboxes, and use different instances to provide services for different callers. Due to an attribute of natural isolation between sandboxes, different sandboxes cannot access data from each other. In this way, a system-level data security mechanism can be provided, to avoid a problem that data of each caller is abused, misused, or leaked, and ensure data security.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of a communication system according to an embodiment of this application;
FIG. 2 is a schematic diagram of an application scenario according to an embodiment of this application;
FIG. 3 is a schematic diagram of a hardware structure of an electronic device according to an embodiment of this application;
FIG. 4 is a schematic diagram of a service scenario according to an embodiment of this application; not-claimed
FIG. 5 is a schematic diagram of a solution in a current technology;
FIG. 6 is a schematic diagram of a software architecture according to an embodiment of this application;
FIG. 7 is a schematic diagram of an access control model according to an embodiment of this application;
FIG. 8 is a flowchart of an access control method according to an embodiment of this application;
FIG. 9 is a flowchart of another access control method according to an embodiment of this application; and
FIG. 10(A) to FIG. 10(C) are three different schematic diagrams of isolating application data through a sandbox according to an embodiment of this application.

### DESCRIPTION OF EMBODIMENTS

The technical solutions according to embodiments of this application are clearly and completely described in the following with reference to the accompanying drawings. In description of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In addition, in the descriptions in embodiments of this application, "a plurality of" means two or more than two.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. The user interface is generally represented in the form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a Widget that is displayed on a display of the electronic device.

A communication system provided in embodiments of this application is first described.

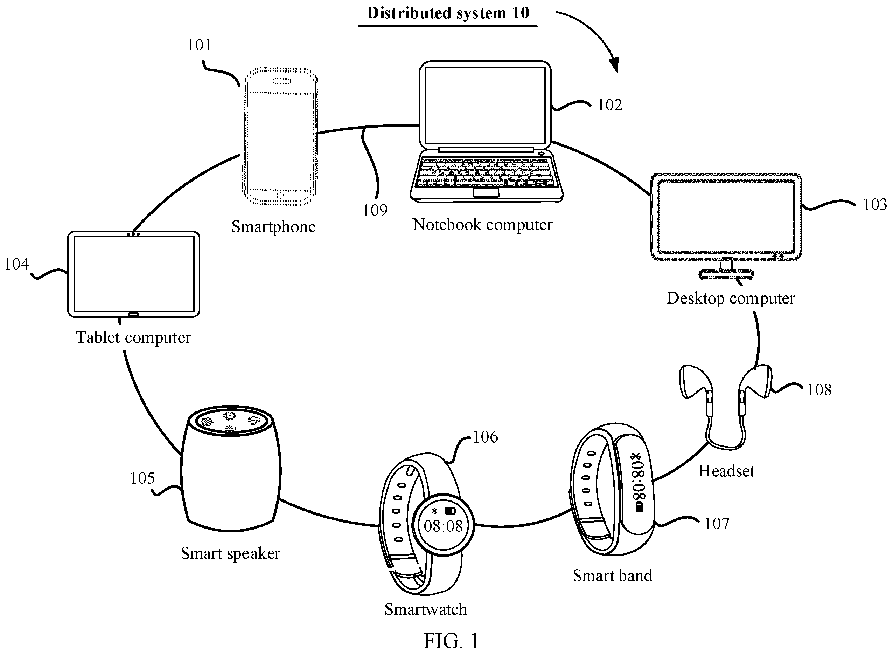

FIG. 1 shows a communication system 10 according to an embodiment of this application. The communication system may also be referred to as a distributed system 10.

The distributed system 10 may include a plurality of intelligent terminal devices, and a communication connection 109 is established among the plurality of terminal devices. For example, as shown in FIG. 1, the terminal device may be a smartphone 101, a notebook computer 102, a desktop computer 103, a tablet computer 104, a smart speaker 105, a smartwatch 106, a smart band 107, a headset 108, or an electronic device of another type. For example, the terminal device may further include a desktop computer, a laptop computer, a handheld computer, an augmented reality (augmented reality, AR) device, a virtual reality (virtual reality, VR) device, an artificial intelligence (artificial intelligence, AI) device, a smart screen, an in-vehicle infotainment, a game console, or another intelligent wearable device. The terminal device may further include an Internet of things (internet of things, IOT) device or a smart home device, such as a smart water heater, a smart lamp, or a smart air conditioner. This is not limited in this application. In this embodiment, the terminal device may also be referred to as a terminal for short. The terminal device is generally an intelligent electronic device that can provide a user interface, interact with a user, and provide a service function for the user.

When the plurality of electronic devices in the distributed system 10 are all devices deployed at home, the distributed system 10 may also be referred to as a home distributed system.

Each terminal device in the distributed system 10 may be equipped with an Android^{®} system, a Windows^{®} system, an iOS^{®} system, a macOS^{®} system, a Linux^{®} system, a HarmonyOS^{®} system (HarmonyOS, HOS), or an operating system of another type. Operating systems of the terminal devices in the distributed system 10 may be the same or may be different. This is not limited in this application. In some embodiments, each terminal in the distributed system 10 is equipped with a HarmonyOS^{®} system. In this case, the distributed system 10 may be referred to as a HarmonyOS^{®} super virtual terminal (super virtual device), or may be referred to as a HarmonyOS^{®} super terminal. It means that capabilities of the plurality of terminals are integrated by using a distributed technology and stored in a virtual hardware resource pool, and the terminal capabilities are uniformly managed, scheduled, and integrated based on a service requirement, to provide services externally. In this way, quick connection, capability mutual aid, and resource sharing can be implemented between different terminals.

In the distributed system 10, the communication connection 109 is established between the terminals. The communication connection 109 may be a far field communication connection. For example, the terminals log in to a same account, to implement connection and communication through the Internet. The plurality of electronic devices in the distributed system 10 may alternatively log in to different accounts, but are connected in a binding manner. For example, an electronic device 100 and an electronic device 200 may log in to different accounts. The electronic device 100 binds the electronic device 200 to the electronic device 100 in a device management application, and then connects to the electronic device 200 through the device management application. In the following embodiment of this application, the electronic device 100 may be any electronic device in the distributed system 10, and the electronic device 200 may also be any electronic device in the distributed system 10. For example, the electronic device 100 is the smartphone, and the electronic device 200 is the smart screen.

In the distributed system 10, the communication connection 109 may alternatively be a near field communication connection, for example, a wired connection such as a universal serial bus (universal serial bus, USB) connection, or a wireless connection such as a Bluetooth (Bluetooth, BT) connection or a wireless fidelity (wireless fidelity, Wi-Fi) connection, to implement communication between the terminals without an account or with different accounts. A type of the communication connection is not limited in this embodiment of this application. A Bluetooth (Bluetooth, BT) module and/or a wireless local area network Network (wireless local area network, WLAN) module may be configured in the terminal device. The Bluetooth module can provide a Bluetooth communication solution including one or more of classic Bluetooth (Bluetooth 2.1) or Bluetooth low energy (Bluetooth low energy, BLE). The WLAN module can provide a WLAN communication solution including one or more of wireless fidelity peer-to-peer (wireless fidelity peer-to-peer, Wi-Fi P2P), wireless fidelity local area network (wireless fidelity local area network, Wi-Fi LAN), or wireless fidelity software access point (wireless fidelity software access point, Wi-Fi softAP). In some embodiments, Wi-Fi P2P means that devices in a wireless network can be connected to each other in a peer-to-peer manner without using a wireless router. In an Android^{®} system, Wi-Fi P2P may also be referred to as wireless fidelity direct (wireless fidelity direct, Wi-Fi direct). Devices that establish a Wi-Fi P2P connection can exchange data directly through Wi-Fi (need to be in a same frequency band) without connecting to a network or hotspot, and realize peer-to-peer communication, such as transferring files, pictures, videos and other data. Compared with Bluetooth, Wi-Fi P2P has advantages such as a faster search speed, a faster transmission speed, and a longer transmission distance. Data transmission and exchange can be performed between the terminals through the communication connection 109.

In addition, the plurality of electronic devices in the distributed system 10 may alternatively be connected and communicate with each other in combination with any of the foregoing manners. This is not limited in this embodiment of this application.

In this embodiment of this application, a conventional APP, for example, a conventional camera application, a gallery application, or a setting application, may be installed in each device in the distributed system 10. In subsequent embodiments, the conventional APP may be referred to as an APP for short.

In addition, a distributed application (distributed application) may be installed in the distributed system 10 provided in embodiments of this application. The distributed application may be a system application, or may be a third-party application. This is not limited herein.

Different from conventional applications that include a plurality of capabilities, distributed applications support deployment in units of a single capability. An APP is a computer program that can implement one or more functions, can run independently, and generally has a visual user interface for interaction with a user. A distributed application includes one or more functional components.

A **functional component** is the minimum capability unit that can run independently in an electronic device. It is a concept of abstract encapsulation of a single capability. A conventional APP integrates a plurality of functions, and a functional component uses each function as an independent service-oriented basic capability and exists independently. In other words, a functional component is a program entity that implements a single function.

Each functional component can be downloaded, installed, and run independently. A plurality of functional components that form a same distributed application may be deployed in a same electronic device in the distributed system 10, or may be deployed in different electronic devices. A distributed application can encapsulate functional modules such as remote virtualization, remote calling, meta ability management, cross-platform compatibility, and security. A distributed application can call computing capabilities that other devices have but the local device does not have, and has a capability of splitting computing work of the local device to a plurality of devices for collaboration.

The distributed system 10 can endow functional components with more flexible features such as orchestration and migration, and the distributed system 10 can orchestrate appropriate functional components to enable the functional components to collaborate to complete work.

It may be understood that, the functional component is only a term used in this embodiment, a meaning represented by the functional component has been recorded in this embodiment, and a name of the functional component does not constitute any limitation on this embodiment. In addition, in some other embodiments of this application, the functional component may also be referred to as another term such as a system component, a system service, a service function, or a meta ability/atomic ability (Ability). In subsequent embodiments of this application, a "functional component" is used for description.

A Harmony^{®} system is used as an example. Functional components in the Harmony^{®} system can be classified into the following two types:

### (1) Particle ability (particle ability, PA)

The PA is a functional component without a UI, may be described as an atomized service or an atomized functional module/unit, is a program entity that can implement a single function, and is a program segment that can be independently executed. The PA can provide support for an FA, for example, serve as a background service to provide computing capabilities or as a data warehouse to provide data access capabilities. For example, a beauty function, a positioning function, and an audio/video codec function may be encapsulated as PAs. In some embodiments, a particle ability (PA) may also be referred to as an atomic ability (AA).

The PA has features such as multi-end deployment and distributed execution. The PA only has dependencies on system services, and does not have dependencies on other PAs.

The PA can encapsulate remote virtualization, remote calling, PA management, cross-platform compatibility, security, and the like, and open cross-device enabling and evoking services to developers, so that other devices can call computing capabilities of the local device and collaborate to complete computing work. The PA supports a Service Ability, a Data Ability, and the like. The Service Ability is for providing a capability of running tasks in the background. The Data Ability is for providing unified data access abstraction externally.

In this embodiment of this application, the PA may be called by another APP, an FA, or a PA, or the PA may call another PA, an FA, or an APP, to implement more and more complex functions.

### (2) Feature ability (feature ability, FA)

The FA is a functional component that includes one or more groups of UIs and can provide a capability of interacting with users. For example, a navigation interface in a map application, a video call interface in an instant messaging application, and the like may be implemented as FAs.

In some embodiments, the FA may be developed based on an MVVM (model-view-view-model) mode, to separate a view UI from service logic. Service logic code and view UI code are deployed separately. The view UI code can be integrated into other APPs. During running, the view UI code can communicate with the service logic code to obtain the data required for UI display.

The FA supports page template capabilities, such as Empty Ability, Login Ability, and Setting Ability. The FA may use a script language (java script, JS) to provide a declarative development mode, use HTML-like and cascading style sheet (cascading style sheet, CSS) declarative programming languages as page layout and page style development languages, and support a JS language of an ECMAScript specification to provide page service logic.

The FA may have capabilities such as installation-free, independent operation, cross-device UI migration, and cross-device binary migration. The FA further has features of multi-end deployment and distributed execution.

In this embodiment of this application, the FA may be called by another APP, an FA, or a PA, or the FA may call another PA, an FA, or an APP, to implement more and more complex functions.

Similarly, the functional component PA/FA has the features of multi-end deployment and distributed execution. To be specific, one distributed application may include a plurality of PAs/FAs, and the plurality of PAs/FAs may be deployed in a same terminal device or different terminal devices. Each terminal device in the distributed system 10 may be equipped with an APP/PA/FA, and the terminal device in the distributed system 10 may synchronize PA/FA information of another terminal device, to facilitate calling. For example, a PA/FA deployed in a terminal device may be called by an application deployed in the terminal device, or may be called by an application deployed in another terminal device in the distributed system 10.

It may be understood that "FA" and "PA" are merely terms used in this embodiment, and may also be referred to as other terms in some other embodiments of this application. For example, "PA" and "FA" may also be referred to as other terms such as an atomic ability, an atomic application, a meta ability, and an atomized functional module/unit. Similarly, "PA" may also be referred to as another term such as a meta service, an atomized service, or an atomic service in some other embodiments, and "FA" may also be referred to as another term such as a feature capability or a meta program in some other embodiments.

A plurality of functional components forming a distributed application may be developed or provided by a same developer, or may be separately developed or provided by a plurality of developers. This is not limited herein. Different developers jointly develop functional components. This can improve development efficiency of the distributed application.

In this embodiment of this application, a functional component may provide a standardized calling interface externally for calling by a callee. A caller is an initiator of a calling request, and a callee is a target object of a calling request. A common APP may call a functional component, and the called functional component may further call another functional component. This multi-level calling case may be referred to as chain calling.

In this embodiment of this application, in a calling relationship, a party that initiates a calling function may be referred to as a caller or a caller, and a party that is called by a callee and that provides a resource may be referred to as a callee or a callee. The caller or the callee may be an APP, an FA, or a PA. An initial initiator of the entire calling chain may be referred to as the first caller, and the first caller may be, for example, an APP or an FA. For example, the calling chain is as follows: An APP 1 calls a PA 1, the PA 1 calls a PA 2, and the PA 2 calls an FA 1. In this case, the APP 1 is the first caller. For another example, the calling chain is as follows: The FA 1 calls the PA 1, and the PA 1 calls the PA 2. In this case, the FA 1 is the first caller.

In some embodiments of this application, the caller may also be referred to as a subject application, and the callee may also be referred to as an object application.

In the calling chain, callers and callees may be deployed in a same electronic device, or may be deployed in different electronic devices.

A device in which a caller is located may be referred to as a subject device, and a device in which a callee is located may be an object device.

After the devices in the distributed system 10 establish the communication connection, each device synchronizes functional component information, APP information, and the like of other devices in the distributed system. Specifically, each device may synchronize an identifier of a functional component and/or an APP installed in the device and device information (for example, a device identifier) of the device to the distributed system 10 to be seen by other devices, to facilitate subsequent mutual calling between the devices in the distributed system 10. Callers that can call each functional component or APP and another functional component or APP that can be called by each functional component or APP, that is, calling permission and/or called permission, may be preset and recorded on each electronic device, and synchronized to the distributed system 10.

With reference to the foregoing description, for ease of understanding, a simple example is provided herein for description.

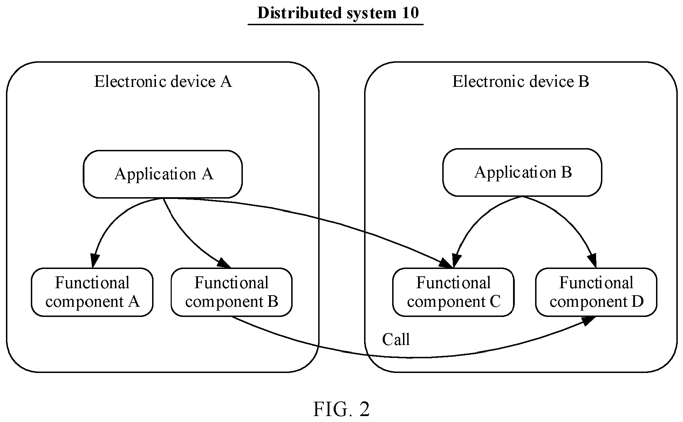

Refer to FIG. 2. A distributed system 10 includes an electronic device A and an electronic device B. An application A, a functional component A, and a functional component B are deployed in the electronic device A, and an application B, a functional component C, and a functional component D are deployed in the electronic device B. Each electronic device in the distributed system 10 may learn and call a functional component on another electronic device. For example, the application A may implement a corresponding function by calling the functional component A, the functional component B, the functional component C on the electronic device B, and the like, and the application B may implement a corresponding function by calling the functional component C, the functional component D, and the like. In addition to the case that an application calling a functional component, the functional components may also call each other. For example, the functional component B deployed on the electronic device A may further call the functional component D deployed on the electronic device B.

It should be noted that the scenarios shown in FIG. 1 and FIG. 2 are merely used to assist in describing the technical solutions provided in embodiments of this application, but do not constitute a limitation on embodiments of this application. In an actual service scenario, the distributed system 10 may include more or fewer terminal devices, more or fewer distributed applications and/or PAs/FAs may be deployed in each terminal device, and each distributed application may include more or fewer PAs/FAs. No limitation is imposed on a calling relationship between APPs/PAs/FAs, or the like.

The following describes an example of a structure of an electronic device provided in embodiments of this application.

The electronic device provided in embodiments of this application may be any electronic device described in the distributed system 10 shown in FIG. 1, or may be the electronic device 100, the electronic device 200, or another electronic device in a subsequent embodiment of this application. This is not limited herein. The electronic device 100 is used as an example for description.

In embodiments of this application, the electronic device 100 may include but is not limited to a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device. A specific type of the electronic device 100 is not limited in this embodiment of this application.

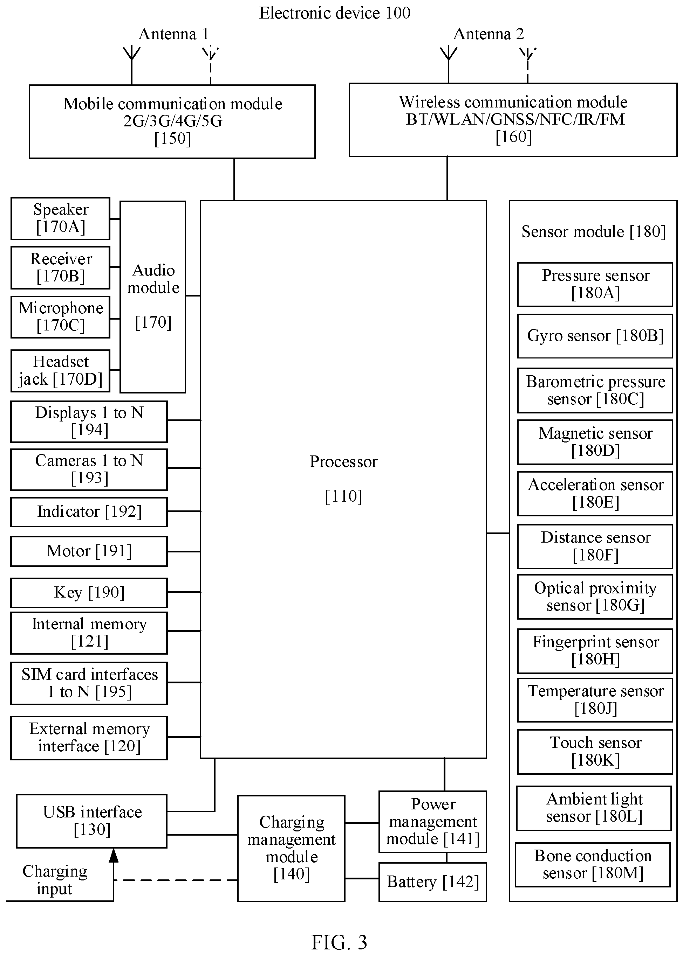

FIG. 3 is a schematic diagram of a hardware structure of an electronic device 100 according to an embodiment of this application;

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is generally configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142 and the charging management module 140 to the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. The demodulator then transmits the low-frequency baseband signal obtained through demodulation to the baseband processor for processing. The low-frequency baseband signal is processed by the baseband processor and then transmitted to the application processor. The application processor outputs a sound signal by an audio device (not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The internal memory 121 may include one or more random access memories (random access memories, RAMs) and one or more non-volatile memories (non-volatile memories, NVMs).

The random access memory has features of a fast read/write speed and volatility. Volatility means that once a power is off, data stored in the RAM disappears. Generally, the random access memory has extremely low static power consumption and high running power consumption.

The non-volatile memory has features of non-volatility and stable data storage. Non-volatility means that after a power is off, data stored in the non-volatile memory does not disappear and can be stored for a long time after the power is off.

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5^{th} generation DDR SDRAM is generally referred to as a DDR5 SDRAM), and the like. The non-volatile memory may include a magnetic disk storage (magnetic disk storage), a flash memory (flash memory), or the like.

The magnetic disk storage is a memory that uses a disk as a storage medium, and has features such as a large storage capacity, a high data transmission rate, and long-term storage of stored data.

Flash memories may be divided according to an operation principle and include a NOR FLASH, a NAND FLASH, a 3D NAND FLASH, and the like; may be divided according to a potential level of a storage unit and include a single-level storage unit (single-level cell, SLC), a multi-level storage unit (multi-level cell, MLC), a triple-level storage unit (triple-level cell, TLC), a quad-level storage unit (quad-level cell, QLC), and the like; or may be divided according to a storage specification and include a universal flash storage (universal flash storage, UFS), an embedded multimedia card (embedded multi media Card, eMMC), and the like.

The random access memory may be directly read and written by the processor 110, may be configured to store an executable program (for example, machine instructions) of an operating system or another running program, and may be further configured to store data of a user and an application, and the like.

The non-volatile memory may also store an executable program, data of a user, data of an application, and the like, which may be pre-loaded into the random access memory for directly reading and writing by the processor 110.

The external memory interface 120 may be configured to connect to an external non-volatile memory, to extend a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (generally on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light through the light emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The key 190 includes a power key, a volume key, and the like. The key 190 may be a mechanical key, or may be a touch key. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a Nano SIM card, a Micro SIM card, a SIM card, and the like. A plurality of cards may be inserted into the same SIM card interface 195 simultaneously. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

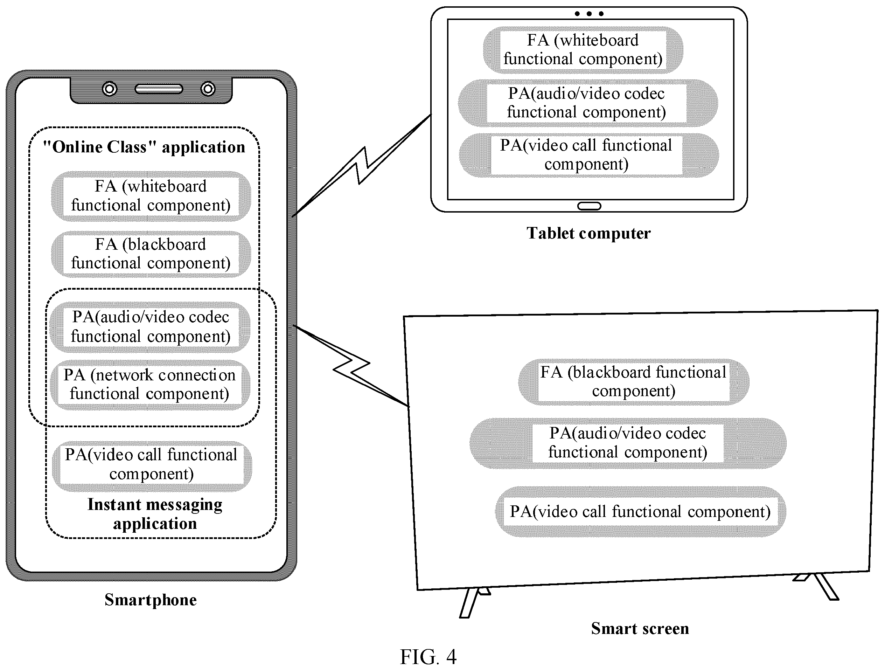

With reference to the foregoing description of the distributed system 10 FIG. 4 shows an example of a possible distributed remote teaching service scenario.

As shown in FIG. 4, a distributed system includes electronic devices such as a smartphone, a tablet computer, and a smart screen. Devices in the distributed system are connected to each other in pairs. The smartphone, the tablet computer, and the smart screen may be equipped with different software operating systems (operating systems, OS). For example, the smartphone and the tablet computer may be equipped with an Android^{®} system, and the smart screen may be equipped with a Harmony^{®} system.

An "online class" application is installed in the smartphone. The "online class" is an application that is installed in an electronic device and that provides various functions required for a teacher and a student to attend a remote class. A name of the application is not limited in this embodiment of this application. The "online class" may include the following functional components: a blackboard functional component, a whiteboard functional component, an audio/video codec functional component, and a network connection functional component. The blackboard functional component and the whiteboard functional component are FAs, and the audio/video codec functional component and the network connection functional component are PAs. The blackboard functional component provides a remote course presentation function. The whiteboard functional component provides a remote question answering function. The audio/video codec functional component provides an audio/video codec function. The blackboard functional component and the whiteboard functional component may further implement a video communication function by calling a video call functional component in the smartphone. The video call functional component is a PA.

On the teacher side, when using the "online class" on the smartphone, the teacher can migrate or switch the blackboard functional component to the smart screen to present the course on the smart screen.

On the student side, when using the "online class" on the smartphone, a student can migrate or switch the whiteboard functional component to the tablet computer, to answer a question on the tablet computer.

Migrating or switching a functional component from one device A to another device B may include the following two types: 1. UI migration. When a view UI of an FA is separated from service logic, and a device A can run service logic code, a device B may be triggered to run code of the view UI. It seems to the user that the functional component is migrated from the device A to the device B. 2. Overall migration. The overall migration refers to that after the device B downloads and installs the functional component from the device A or from the network, the device B runs the functional component and provides a corresponding function.

In the remote teaching service scenario, the "online class" is a caller, and the whiteboard functional component in the tablet computer and the blackboard functional component in the smart screen are callees.

FIG. 4 further shows another possible **distributed video call service** scenario.

As shown in FIG. 4, another distributed application such as an instant messaging application may be further installed in the smartphone. The instant messaging application may provide a video call function, a voice call function, and another communication function. The instant messaging application may include the following functional components: a video call functional component, an audio/video codec functional component, and a network connection functional component.

When using the instant messaging application on the smartphone, the user may migrate or switch the video call functional component of the application to the smart screen or the tablet computer, to perform a video call through the smart screen or a camera and a display of the tablet computer.

In the video call service scenario, the instant messaging application is a caller, and the video call functional component is a callee.

It should be noted that the service scenario shown in FIG. 4 is merely used to assist in describing the technical solutions in embodiments of this application. In an actual service scenario, the distributed system shown in FIG. 4 may include more terminal devices, more or fewer functional components may be deployed in each device, and each distributed application may include more or fewer functional components.

Through the distributed system 10 shown in FIG. 1 and FIG. 2 and the distributed service scenario shown in FIG. 4, software and hardware capabilities of different devices may be integrated, to implement intelligent all-scenario experience.

In the distributed system 10 shown in FIG. 1 and FIG. 2 and the distributed service scenario shown in FIG. 4, a functional component may be called across devices. Therefore, to avoid problems such as confusion, misuse, or malicious use of memory data of each caller, ensure that each functional component can properly access a device resource, and ensure secure sharing of resources, data, and the like between devices in the distributed system, an embodiment of this application provides an access control method. The following describes in detail a specific solution provided.

Resources shared between devices in the distributed system may include but are not limited to: a software resource, a hardware resource, a peripheral or accessory resource of a device, and the like.

Data generated by an application or a functional component during running may include the following two types:

### 1. Memory data

When the electronic device starts or initiates an instance of an application or a functional component, corresponding memory data is generated.

The memory data is data in the RAM and may be read at any time. The data disappears when the power is off.

The instance is the running application or the running functional component. In this embodiment of this application, the instance may be a process, or may be a thread. The process is an execution activity of the application or the functional component on the computer. The thread is a single sequential control flow during execution of the application or the functional component. One process may include a plurality of threads.

To be specific, as long as an application or a functional component starts to run, a corresponding instance is generated, and memory data is generated.

### 2. Application data

The application data is content written during running of the application or the functional component, for example, a photo or a video obtained by a photographing application, or text edited by the user in a document application. The application data may also be referred to as file data.

The application data is data in the NVM, and may be stably stored in the NVM for a long time.

In a conventional single-machine scenario, an APP in an electronic device applies to a user for access authorization of a sensitive resource in the form of an independent subject, and directly provides various services for the user after the access is authorized.

Considering that application data of a plurality of APPs in the electronic device in the single-machine scenario is stored in an NVM, after an APP is authorized by the user, the authorized APP may have access permission for all data in the NVM. After the APP is intruded, the data in the NVM is leaked. Based on this, a concept of a sandbox is provided in a related technology.

A sandbox (Sandbox), or referred to as a sandbox, is a virtual system program that has an independent running environment. To be specific, the virtual system has an independent RAM and an independent NVM, allowing an APP to run in the virtual system. Through isolation of the sandbox, the APP in the sandbox can only access resources in the sandbox, but cannot access other resources in the device, ensuring the security and stability of the device.

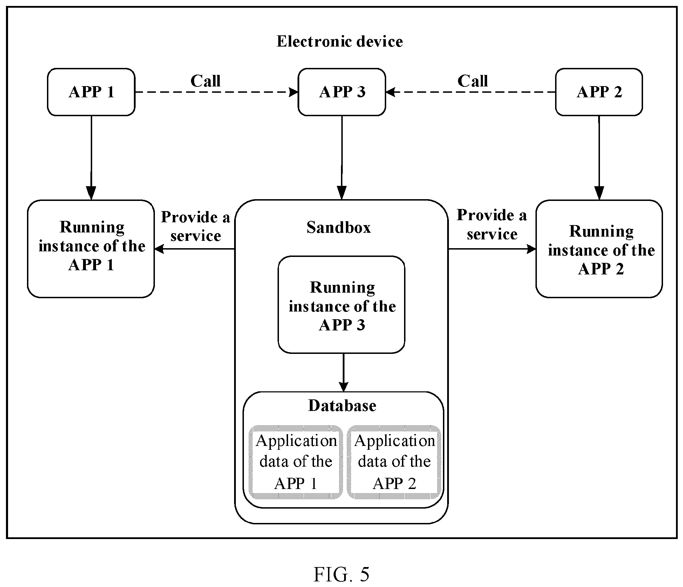

FIG. 5 shows an example of an implementation in which a conventional APP provides a service through a sandbox when the conventional APP is called in a single-machine system. As shown in FIG. 5, an APP 1 and an APP 2 are callers, and call a service corresponding to an APP 3. Each APP has a corresponding instance, and instances are naturally isolated from each other. The electronic device creates a sandbox for the called APP 3. The APP 3 runs an instance of the APP 3 in RAM resources in the sandbox to provide a service for the APP 1 and the APP 2, and stores, in a database of the sandbox, application data generated during running of the instance. The database of the sandbox is a general term of NVM resources in the sandbox. The database in the sandbox is shared. As a result, the data generated when the instance of the APP 3 in the sandbox provides the service for the APP 1 and the APP 2 is stored in the database of the sandbox. Data generated when the APP 1 and the APP 2 call the APP 3 can be isolated only through the APP 3. When the sandbox has vulnerabilities or encounters malicious behavior, data of the APP 1 and the APP 2 may be leaked. In addition, because the callee APP 3 cannot distinguish between identities of different caller APPs (the APP 1 and the APP 2), there are problems such as inability to trace the calling relationship and difficulty in recording audit logs.

In the distributed system, permission authorization is performed only on APPs that are visible to users. Permission authorization cannot be performed on functional components that are not directly perceived by users. Therefore, data security risks also exist when the caller APP calls the functional component.

In a distributed service scenario, when a caller APP calls a functional component, if the manner shown in FIG. 5 is used, and the callee functional component provides a shared service for different caller APPs in a sandbox in the form of a single instance, the functional component may generate application data from different devices and different callers, and a problem of abuse or misuse of application data of each caller may occur due to vulnerabilities or malicious behavior of the functional component. In addition, because the callee functional component cannot distinguish between identities of different caller APPs, there are problems such as inability to trace the calling relationship and difficulty in recording audit logs. For example, in the distributed service scenario shown in FIG. 4, a sandbox is created for the video call capability unit in the smart screen, but the video call capability unit in the smart screen may simultaneously obtain data of the "online class" in the smartphone and application data of the instant messaging application. The two types of data may be leaked.

Embodiments of this application provide an access control method, an electronic device, and a system, to resolve a problem such as abuse, confusion, misuse, or leakage of memory and application data of each caller in a calling event. The access control method may be applied to a communication system including a plurality of electronic devices.

According to the method provided in this application, a same callee can start a plurality of sandboxes, and use different sandboxes to run instances to provide services for different callers. Due to an attribute of natural isolation between sandboxes, different sandboxes cannot access memory data and application data from each other. In this way, a system-level data security mechanism can be provided, to avoid a problem that data of each caller is abused, misused, or leaked, and ensure data security.

According to the access control method provided in this application, when providing services for different callers, a callee can run different instances in different sandboxes, and memory data isolation is maintained between the different instances, to more effectively reduce risks that data of each caller is abused, confused, misused, or leaked, and ensure data security.

The following describes, by using an example, a software system architecture of an electronic device 100 provided in an embodiment of this application.

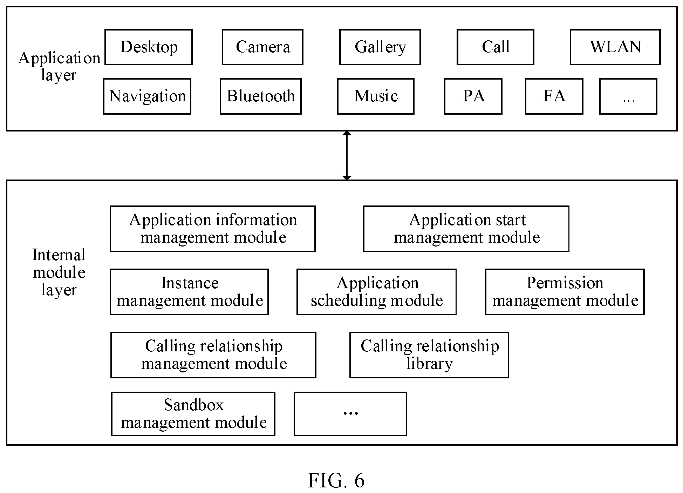

FIG. 6 is a block diagram of a software architecture of the electronic device 100 according to an embodiment of this application. The software system of the electronic device 100 may use a layered architecture, an event-driven architecture, a micro-kernel architecture, a microservice architecture, a cloud architecture, or the like. For example, the software system of the electronic device 100 includes but is not limited to Harmony^{®}, iOS^{®}, Android^{®}, Windows^{®}, Linux^{®}, or another operating system.

In the layered architecture, the software system is divided into several layers, and each layer has a clear role and task. Layers communicate with each other through a software interface (application programming interface, API). In some embodiments, as shown in FIG. 6, the software architecture of the electronic device 100 may include an application layer, an internal module layer, and the like.

As shown in FIG. 6, the application layer may include a series of APPs and functional components. The application layer may include a system application and a third-party non-system application. For example, the application layer may include but is not limited to desktop, camera, gallery, call, navigation, WLAN, Bluetooth, music, a plurality of PAs and Fas, and the like.

The internal module layer can provide application programming interfaces and function support for the APPs and PAs/FAs of the application layer. The internal module layer may include some predefined functions and/or functional modules/services. Modules at the internal module layer may collaborate, and are configured to manage discovery, registration, query, and migration of an application or a functional component, and manage creation and calling of an instance of an application or a functional component, and the like. Such modules may collaborate with other modules in the electronic device to implement the access control method provided in embodiments of this application.

For example, the internal module layer may include but is not limited to an application information management module, an application start management module, an instance management module, an application scheduling module, a permission management module, a calling relationship management module, a calling relationship library, an application file management module, and the like.

The application information management module is configured to manage information about each APP or functional component installed in the electronic device 100, to facilitate discovery, registration, installation, uninstallation, and the like of each APP/PA/FA. For example, a UID is assigned to each APP or functional component, and a PID is assigned to each running instance. For another example, registration information of each APP or PA/FA is managed. For example, an identifier of each APP/PA/FA, an identifier of an electronic device where the APP/PA/FA is deployed, and the like are obtained, recorded, and managed, to facilitate functions such as registration information query.

The application start management module is configured to manage start work of each application or functional component. For example, when the electronic device 100 receives a request of another device for calling an application, the application start management module may start the application.

The instance management module is responsible for dynamically starting or creating an instance based on information about a caller. Specifically, when different devices and/or different callers request to call an application or a functional component in the electronic device 100, the instance management module separately starts an instance of the application or the functional component for the different devices and/or different callers, and provides services for the different devices and/or different callers. The instance management module is further configured to manage a life cycle of each started instance, for example, start, stop, destroy, or restart the instance.

The application scheduling module may be responsible for managing calling between APPs/PAs/FAs, for example, may be configured to initiate a calling request of a caller for a callee. For example, an APP sends a calling request for a PA to the application scheduling module under triggering of a user operation. The application scheduling module may then parse the calling request to obtain an identifier of the APP, an identifier of the callee PA, and a corresponding request parameter.

The permission management module may be configured to manage permission information of each APP/PA/FA, and is responsible for controlling permission of a caller to call a callee, permission of each APP/PA/FA to access a system resource, and the like. The permission management module may be further responsible for synchronizing permission information and/or authorization information of APPs/PAs/FAs respectively deployed in a plurality of terminal devices in the same distributed system. The permission management module may be further configured to generate and provide permission-related prompt information for the user. In some embodiments, when obtaining a calling request, initiated by an APP that does not have permission to call an instance, for calling the instance, the permission management module may ask the user whether to grant permission, change permission, delete a malicious APP, or the like.

The calling relationship management module is responsible for maintaining calling relationships formed by instances of a plurality of groups of callers and callees, and storing the calling relationships in the calling relationship library.

The calling relationship library can be used to store the calling relationships formed by the plurality of groups of callers and callees. Each calling relationship may include a calling relationship identifier (identifier, ID), caller information, callee information, and the like. The caller information may include a caller name, a device ID, a user identifier (user identifier, UID), a developer signature, and the like. The callee information may include information such as a callee name, a device ID, a UID of an instance, and a process identifier (process identifier, PID) of the instance.

Table 1 below shows an example of two calling relationships.

**Table 1**

| Calling relationship ID | Caller information | | | | Callee information | | |
|---|---|---|---|---|---|---|---|
| | Name | Device ID | UID | Developer signature | Name | Device ID | PID of an instance |
| 1 | APP 1 | Electronic device 100 | UID 1 | HUAWEI | Functional component 3 | Electronic device 300 | PID 1 |
| 2 | APP 2 | Electronic device 200 | UID 2 | HUAWEI | Functional component 3 | Electronic device 300 | PID 2 |

It can be learned from Table 1 that, the two calling relationships are respectively that the APP 1 on the electronic device 100 and the APP 2 on the electronic device 200 respectively call the functional component 3 in the electronic device 300, and the electronic device 300 starts two instances of the functional component 3 to respectively provide services for the APP 1 and the APP 2.

The calling relationship shown in Table 1 may be stored not only in the electronic device in which the callee is located, but also in the electronic device in which the caller is located. This is not limited herein.

A sandbox management module is responsible for managing an instance in a sandbox and application data generated by the instance, and storing the application data generated by the instance in the sandbox in the form of directories. To save resources, different instances can run in a same sandbox, or different instances in a same sandbox may provide services for a plurality of callers. In the present invention, application data generated by instances of different services in a same sandbox is isolated in the form of directories. Different directories correspond to different identifiers. Specifically, an identifier of a directory may be a caller name, a device ID, a user identifier (user identifier, UID), a developer signature, a callee name, a device ID, a UID of an instance, a process identifier (process identifier, PID) of the instance, or the like. The identifier of the directory may be a set of the foregoing plurality of identifiers, for example, a set of a developer signature and a callee identifier. The sandbox management module stores different data in different directories based on different identifiers for easy search and maintenance.

The foregoing description of the software architecture of the electronic device 100 is merely an example. It may be understood that the software architecture shown in this embodiment of the present invention does not constitute a specific limitation on this application. In some other embodiments of this application, the software architecture of the electronic device 100 may include more or fewer modules than those shown in the figure, or combine some modules, or split some modules, or have different architecture arrangements. The components shown in the figure may be implemented by hardware, software, or a combination of software and hardware.

The following describes an **access control model** provided in an embodiment of this application.

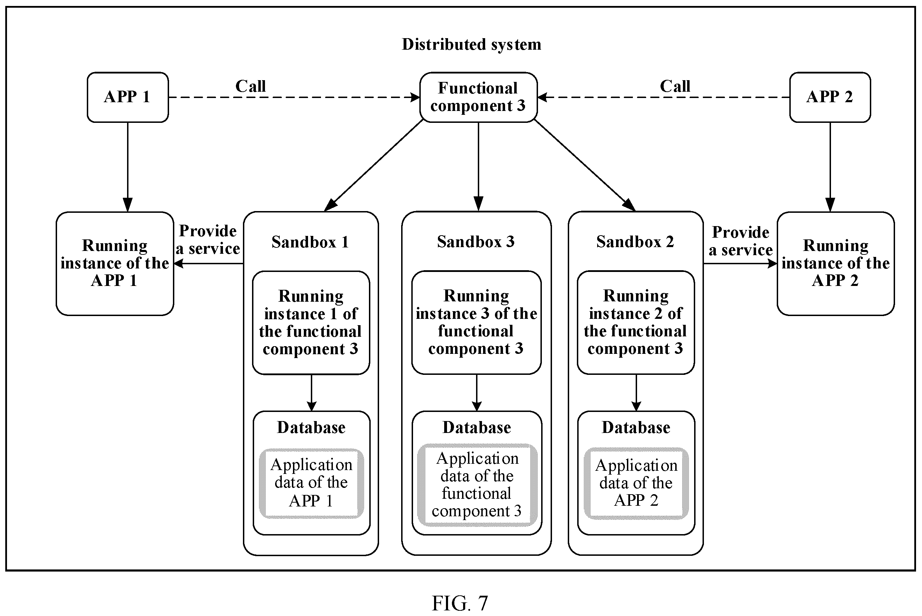

In an embodiment shown in FIG. 7, a caller APP 1, a caller APP 2, and a callee functional component 3 may be installed in a distributed system. The APP 1, the APP 2, and the functional component 3 may be installed in a same device or different devices in the distributed system. This is not limited in this embodiment. APPs and/or functional components in the same distributed system may call each other. The callee functional component 3 may be an FA or a PA. Types of the caller and the callee are not limited in this embodiment. For example, in some other embodiments, the caller is not limited to an APP, and may also be implemented as another functional component; and the callee may be not limited to a functional component, and may also be implemented as an APP. An APP may call a functional component, a functional component may call another functional component, an APP may also call another APP, and a functional component may also call an APP.

The electronic device creates different sandboxes for different instances of the callee. The different sandboxes have independent running environments. To be specific, the virtual system has independent RAM and NVM resources, and the instances are allowed to run in the virtual system. A sandbox may be created after the electronic device receives a calling request, or may be created after a calling relationship of the electronic device is established. This is not limited herein. A sandbox has an independent running environment. Memory data and application data of different sandboxes are isolated, ensuring high security and data traceability of instance running.

As shown in FIG. 7, the APP 1 and the APP 2 respectively call the functional component 3, and the functional component 3 also runs simultaneously. An electronic device in which the functional component 3 is located may create three instances of the functional component 3 and three corresponding sandboxes, which are respectively an instance 1 of the functional component 3, an instance 2 of the functional component 3, an instance 3 of the functional component 3, a sandbox 1, a sandbox 2, and a sandbox 3. The instance 1 of the functional component 3 may provide a service for an instance of the caller APP 1, the instance 2 of the functional component 3 may provide a service for an instance of the caller APP 2, and the instance 3 of the functional component 3 may provide a service for the functional component 3. The instance 1 of the functional component 3 runs in the sandbox 1, the instance 2 of the functional component 3 runs in the sandbox 2, and the instance 3 of the functional component 3 runs in the sandbox 3. In this way, based on the attribute of isolation between sandboxes, memory data and application data of the instance 1 that provides the service for the caller APP 1, the instance 2 that provides the service for the caller APP 2, and the functional component 3 may be isolated, thereby effectively reducing risks such as abuse, confusion, and leakage of data of each functional component.

In addition, when a caller calls an instance of a callee, each electronic device may record, into an audit log, the current calling event that the caller calls the instance and a sandbox in which the instance runs, and synchronize the calling event to the distributed system, to facilitate subsequent tracing of the calling event, for example, to facilitate cause searching after attack detection, or to find a cause for a possible data security accident or security vulnerability. The calling event may include information such as an occurrence time of the calling event and a calling relationship ID.

In the example in FIG. 7, there are two calling relationships: The APP 1 calls the functional component 3, and the APP 2 calls the functional component 3. The devices in which the APP 1, the APP 2, and the functional component 3 are located may separately record and maintain the calling relationship, and synchronize the calling relationship to the distributed system. In this way, when a problem occurs subsequently, a cause can be easily traced back, and security risks can be reduced.

The following describes an access control method provided in an embodiment of this application.

### Embodiment 1

This embodiment is described by using an example in which both a caller and a callee are deployed on a same electronic device 100.

The electronic device 100 may be an independent electronic device (single-machine), or may be an electronic device in a distributed system. The electronic device 100 may also be referred to as a first device.

Various APPs and functional components may be installed in the electronic device 100. The example provided in this embodiment does not constitute any limitation on other embodiments of this application.

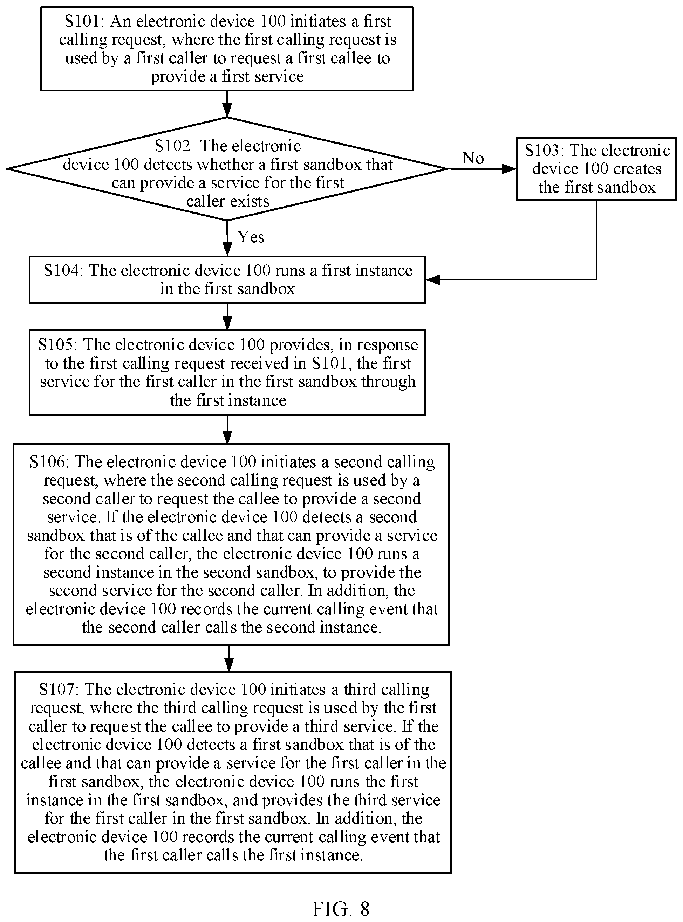

FIG. 8 is a flowchart of an access control method according to an embodiment of this application. The method specifically includes the following steps.

**S101:** The electronic device 100 initiates a first calling request, where the first calling request is used by a first caller to request a callee to provide a first service.

The first calling request may include the first caller, the callee, and indication information of the first service.

A type, content, and the like of the first service are not limited in this embodiment of this application. For example, the first caller may request to access a first resource in the electronic device 100 through the callee. The first resource may include a software resource (for example, a beauty algorithm, a positioning function, and an audio/video codec function) of the electronic device 100, or may include a hardware resource (for example, hardware such as a camera, an audio device, and a display).

Types of the caller and the callee are not limited in this embodiment. The type of the caller may include but is not limited to an APP, a PA, or an FA, and the type of the callee may include but is not limited to an APP, a PA, or an FA. For example, an APP may call a functional component PA/FA, a functional component PA/FA may also call another functional component PA/FA, an APP may also call another APP, and a functional component PA/FA may also call an APP. For example, the caller may be a chat APP, and the callee may be a positioning PA that provides the positioning function. When the chat APP needs to obtain location information, the positioning PA needs to provide a positioning function service. In this case, the chat APP may initiate a calling request to the positioning PA.

The electronic device 100 may initiate the first calling request in response to a received user operation, or may initiate the first calling request independently. This is not limited herein. In some embodiments, the electronic device 100 may display a user interface of the caller, and may detect, through an input device such as a touch sensor, a user touch operation entered by a user in the user interface. The electronic device 100 may then initiate, in response to the user touch operation, the first calling request of the caller for the callee.

In some embodiments, the callee may be pre-installed in the electronic device 100. In some other embodiments, after obtaining the first calling request, the electronic device 100 may download and install the callee from the network if it is detected that the callee does not exits. Alternatively, if the electronic device 100 is located in the distributed system, the electronic device 100 may obtain, download, and install the callee from another electronic device in the distributed system. This is not limited in this embodiment of this application.

In some embodiments, before the electronic device 100 initiates the first calling request, the electronic device 100 needs to determine that the first caller has permission to access the callee and that the first caller has permission to access the first service.

**S102:** The electronic device 100 detects whether a first sandbox that can provide a service for the first caller exists, and if the first sandbox does not exist, performs step S103, or if the first sandbox exists, performs step S104.

In this embodiment, the callee may provide different sandboxes for different callers. Therefore, after obtaining the first calling request, the electronic device 100 may first detect whether the first sandbox that provides a service for the first caller already exists.

Because the sandbox occupies a large quantity of system resources, running a plurality of sandboxes occupies a large quantity of resources in the electronic device 100. In addition, in the sandbox, resources allocated by the electronic device to the sandbox cannot be fully utilized. Therefore, callers may be clustered through sandbox. Specifically, clustering may be performed based on caller information, and instances of services of callers that have the same caller information run in a same sandbox. The caller information may be included in the first calling request in step S101.

The caller information may include one or more of the following: an application identifier (APP ID) of the caller, a user identifier (user ID, UID) of the caller, a developer signature of the caller, an account identifier (account ID) of an object device in which the caller is located, a device identifier (device ID) of the object device, an identifier of the distributed system (system ID) in which the caller is located, and the like.

The APP ID may be used to identify an APP or a functional component.

The developer signature may be used to identify a developer of the APP or the functional component.

The UID may be used to identify the user to which the APP, the functional component, or the instance belongs. Generally, the electronic device assigns different UIDs to different installed APPs or functional components or instances for differentiation. For example, the electronic device may assign a UID to each APP in a data interval (for example, 10000 to 40000), and assign a UID to an instance of each functional component in another data interval (for example, 40001 to 50000).

In some embodiments, the electronic device may assign a same UID to each APP or functional component developed by a same developer. In some other embodiments, the electronic device may alternatively assign different UIDs to APPs or functional components developed by a same developer. In an example, when a first APP is installed, the electronic device assigns a UID of the first APP as a third UID, and a developer signature of a second APP is the same as that of the first APP. When the second APP is installed, the second APP indicates that the second APP and the first APP use the same UID, and the electronic device may also assign the third UID to the second APP. A same APP or functional component may have different UIDs in different electronic devices. A manner or a rule for assigning UIDs by the electronic device to different APPs, functional components, or instances is not limited in this embodiment of this application.

The account ID may be used to identify the user currently logging in to the electronic device, for example, may be a Huawei ID.

The device ID may be used to identify the device. The device ID may be, for example, a device name, a serial number, or a media access control (media access control, MAC) address.

The system ID may be used to identify the distributed system in which the current electronic device is located. In an implementation, an instance may perform process isolation based on a UID. To be specific, instances are distinguished by UIDs. Different UIDs are assigned to different instances. Instances with different UIDs provide services for different callers.

The developer signature is used as an example. When callers are "Huawei Mall" and "Huawei Music", the electronic device determines, based on developer signatures in the two APPs "Huawei Mall" and "Huawei Music", to use a same sandbox to provide services for the two APPs.

**S103:** The electronic device 100 creates the first sandbox.

If the first sandbox that is of the callee and that can be called by the first caller is not detected, a sandbox creation module of the electronic device 100 may create a first sandbox that exclusively provides a service for the first caller. After the sandbox is created, the electronic device 100 may bind the sandbox to the caller information.

The first sandbox is a new independent running environment. After the electronic device 100 creates the first sandbox, a first instance needs to be run in the first sandbox, and a service is provided for the caller through the first instance in the first sandbox. For a specific instance running process, refer to step S104.

For example, the sandbox may be executed by existing sandbox software such as Sandboxie, Oracle VM VirtualBox, and VMware, or may be created by a controller of the electronic device by isolating RAM and NVM resources. This is not limited herein.

**S104:** The electronic device 100 runs the first instance in the first sandbox.

The first instance of the callee is run in the environment of the first sandbox, and application data generated by the first instance of the callee is stored in an NVM of the first sandbox. For the case in which callers having same caller information share one sandbox in step S102, the electronic device 100 may create different instances or share a same instance in the first sandbox for different callers through an instance management module. For details, refer to step S1041 and step S1042. In addition, for the application data generated by the instance running in the sandbox, the electronic device 100 assigns, through a sandbox management module, different directory identifiers to callers having same caller information, and manages application data of different callers in a differentiated manner in the form of directory identifiers. For example, for "Huawei Mall" and "Huawei Music" with the same developer signature, two instances "Huawei Mall" and "Huawei Music" are separately started in the first sandbox, application data is stored in the NVM of the first sandbox, and data in the NVM is managed through different directories. For example, caller information is used as a directory identifier. For example, a directory identifier of "Huawei Mall" is "Huawei Mall", and a directory identifier of "Huawei Music" is "Huawei Music".

Before the running the first instance in step S104, the method further includes:
**S1041:** The electronic device 100 detects whether the first instance that is of the callee and that can provide a service for the first caller exists, and if the first instance does not exist, performs step S1042, or if the first instance exists, performs step S104.

In this embodiment, the callee may provide different instances for different callers. Therefore, after obtaining the first calling request, the electronic device 100 may first detect whether the first instance that is of the callee and that provides the service for the first caller already exists.

In a specific implementation, the electronic device 100 may store a plurality of calling relationships, and the plurality of calling relationships record calling events that a plurality of callers call instances, that is, a case in which different instances provide services for different callers. Such calling relationships may be stored in a calling relationship library of the electronic device 100, so that the electronic device 100 subsequently queries whether an instance that provides a service for the caller already exists.

Each **calling relationship** may include: caller information, instance information of a callee, a calling relationship identifier (identifier, ID), and the like.

In some embodiments, the calling relationship may indicate calling permission. To be specific, a calling relationship may indicate that the caller has permission to call the instance of the callee.

The calling relationship ID may be used to identify different calling relationships, to facilitate identification by the electronic device 100. For example, in the two calling relationships shown in Table 1, a calling relationship ID assigned to the calling relationship that the APP 1 calls the functional component 3 is 1, and a calling relationship ID assigned to the calling relationship that the APP 2 calls the functional component 3 is 2. Similarly, a unique calling relationship ID is assigned to each another calling relationship, to facilitate differentiation and query, and may be shared to another electronic device or synchronized to the distributed system.

In some embodiments, when the instance of the callee is created, the electronic device in which the callee is located may record the calling relationship. Alternatively, when the caller sends the calling request, the electronic device in which the caller is located may also record the calling relationship.

In some embodiments, for the same calling relationship, the device in which the caller is located and the device in which the callee is located may share the same calling relationship ID. The calling relationship ID may be assigned by a subject device, or assigned by an object device, and shared with the peer device.

In some embodiments, after recording a calling relationship, an electronic device may synchronize the calling relationship to the distributed system, and another device in the distributed system may obtain the calling relationship. The caller information may include: an application identifier (APP ID) of the caller.

The caller information may further include one or more of the following: a user identifier (user ID, UID) of the caller, a developer signature of the caller, an account identifier (account ID) of a subject device in which the caller is located, a device identifier (device ID) of the subject device, an identifier of the distributed system (system ID) in which the caller is located, and the like.

The instance information of the callee may include a process identifier (process ID, PID) of the instance and a UID of the instance. The PID is an identifier of the instance. When running an instance, the electronic device assigns a unique PID to the instance. Different instances in the electronic device correspond to different PIDs. When each instance is created, the electronic device also assigns a UID to each instance. UIDs of different instances of a same callee may be different, or may be the same. This is specifically determined based on assignment of the electronic device.

For example, the electronic device 100 may assign a first PID and a first UID to a first instance, and assign a second PID and a second UID to a second instance. For another example, when the callee creates a second instance in response to a second calling request of a second caller, if the second calling request indicates that a second UID of the second instance is the same as the first UID of the first instance, the second UID assigned by the electronic device to the second instance may be the same as the first UID of the first instance.

The instance information of the callee may further include one or more of the following: an application identifier (APP ID) of the callee, a user identifier (user ID, UID) of the callee, a developer signature of the callee, an account identifier (account ID) of an object device in which the callee is located, a device identifier (device ID) of the object device, an identifier of the distributed system (system ID) in which the caller is located, and the like.

In another implementation, an instance may perform process isolation based on a PID. To be specific, instances are distinguished by PIDs. Different PIDs are assigned to different instances. Instances with different PIDs provide services for different callers. For example, in some examples, the first instance and the second instance are different instances of the callee, a same UID is assigned to the first instance and the second instance, different PIDs are assigned to the first instance and the second instance, and the first instance and the second instance respectively provide services for different callers. Process isolation based on a PID can ensure stricter and more secure data and/or process isolation than process isolation based on a UID.

The foregoing solutions in which the instance performs process isolation based on a UID and performs process isolation based on a PID are merely examples, and do not constitute any limitation on other embodiments of this application.

In some embodiments, different callers may be distinguished based on one or more of the foregoing caller information. To be specific, different callers are distinguished based on one or more of the following items: an application identifier (APP ID) of a caller, a UID of the caller, a developer signature of the caller, an account identifier (account ID) of a subject device in which the caller is located, a device identifier (device ID) of the subject device, an identifier of a distributed system (system ID) in which the caller is located, and the like. When one or more of the foregoing items are different, different callers may be distinguished.

In some embodiments, different callers with a same developer signature may indicate to the callee to share a same instance. In this way, while data/process isolation is ensured, data exchange between applications or functional components of the same developer can be further facilitated, and memory occupation, CPU consumption, and the like can be reduced.

In addition to the developer signature, different callers may alternatively share a same instance based on other indication information, such as an APP ID of the caller, an account ID, a device ID, and a system ID, which are not listed one by one herein.

In some embodiments, for a stricter and more accurate calling relationship, the calling relationship may include a plurality of pieces of caller information and callee information. For example, the first caller and the callee are located in a distributed system. To verify the calling relationship more strictly, in addition to the APP ID of the first caller and the UID and/or PID of the first instance of the callee, information such as the ID of the subject device in which the first caller is located and the ID of the object device in which the instance of the callee is located may be further recorded in the calling relationship between the first caller and the callee. In this way, an application or a functional component that may have the same APP ID and that is in another electronic device in the distributed system can be prevented from incorrectly or maliciously calling the first instance, to implement stricter access control.

In this embodiment of this application, the first calling request in S101 may carry information about the first caller, so that the electronic device 100 searches the calling relationship library and determines whether the first instance of the callee corresponding to the first caller exists.

If the determining result in S1041 is no, S1042 is performed; or if the determining result in S1041 is yes, S104 is performed.

**S1042:** The electronic device 100 creates the first instance, and then performs step S104.

If the first instance that is of the callee and that can be called by the first caller is not detected, an instance creation module of the electronic device 100 may create a first instance that exclusively provides a service for the first caller, and perform permission binding.

The first instance may be created in the first sandbox, or may be created in an operating system of the electronic device, and then moved to the sandbox for running.

The first instance is a specific instance of the callee. The first instance and another instance of the callee provide a same function, a same service, and same data, but have different called permission. For example, if the first instance grants calling permission only to the first caller, another application or functional component does not have permission to call the first instance.

When creating the first instance, the electronic device 100 may record and store the calling relationship and the calling permission of calling the first instance by the first caller. For a specific description, refer to the related description in S1041.

In some embodiments, the electronic device 100 needs to perform permission authentication. The electronic device 100 may query permission information of the first caller and the callee, determine whether the first caller has permission to call the first instance of the callee and whether the first caller has permission to access the first service, and may further determine whether the first instance is an instance that the first caller needs to call, and the like. If it is determined that the first caller has permission to call the first instance and/or access the first service, the first instance is run; or if the first caller does not have the permission, a result indicating that the first caller does not have calling permission is returned to the first caller. In some embodiments, the calling relationship may indicate whether the first caller has permission to call the first instance.

In some embodiments, the authentication step of determining whether the first caller has the permission to call the first instance and/or access the first service may be performed before the first instance is run, or before the first instance is created, or before the first calling request is initiated. A time condition in which the authentication occurs is not limited in this embodiment of this application. The authentication step may occur at any time point before the first instance is run, or even the permission may be queried at any time when the first instance is run.

Once it is found that the first caller does not have permission to call the first instance of the callee, the electronic device 100 returns the result indicating that the first caller does not have calling permission to the first caller, ends the current calling event, and does not continue subsequent steps.

There is no sequence between creating the instance in this step and creating the sandbox in step S103. In other words, the sandbox may be created first, and the instance is created in the sandbox; or the instance may be created in the electronic device first, the sandbox is then created, and the instance is run in the sandbox.

In this step, permission confirmation is performed to prevent an application or a functional component that does not have permission to call the first instance from maliciously or incorrectly calling the first instance and accessing a resource of the first instance, to reduce security risks.

**S105:** The electronic device 100 provides, in response to the first calling request received in S101, the first service for the first caller in the first sandbox through the first instance.

Specifically, after determining that the first caller has permission to call the first instance, and determining that the first instance is indeed an instance that needs to be called by the first caller, the electronic device 100 may run the first instance in the first sandbox, allow, in response to the first calling request, the first caller to access a first resource that is in the first sandbox and that is correspondingly provided by the first instance, and return an access result to the first caller. The first resource provided by the electronic device 100 may include a software resource, a hardware resource, and the like that are allocated to the first sandbox.

In addition, when the first caller calls the first instance in the first sandbox, the electronic device 100 may record, into an audit log, the current calling event that the first caller calls the first instance, to facilitate subsequent tracing of the calling event, for example, to facilitate cause searching after attack detection, or to find a cause for a possible data security accident or security vulnerability. The calling event may include information such as an occurrence time of the calling event and a calling relationship ID.

After obtaining an instruction that the first caller ends calling the callee, the electronic device 100 may release a service process of the first instance in the first sandbox, and end the first service provided by the first instance for the first caller, to improve resource utilization of the first sandbox.

Optionally, after step S105, when the first caller no longer needs to call a resource of the electronic device 100, the electronic device 100 may reclaim the resource of the first sandbox, to improve resource utilization of the electronic device 100.

**S106:** The electronic device 100 initiates a second calling request, where the second calling request is used by a second caller to request the callee to provide a second service. If the electronic device 100 detects a second sandbox that is of the callee and that can provide a service for the second caller, the electronic device 100 runs the second instance in the second sandbox, to provide the second service for the second caller. In addition, the electronic device 100 records the current calling event that the second caller calls the second instance. For a specific process, refer to the description that the first caller calls the first instance in the first sandbox in steps S101 to S105. Details are not described herein again.

In this embodiment, the callee may provide different services by running different corresponding instances in different sandboxes based on different callers. For example, the callee may run the first instance in the first sandbox and run the second instance in the second sandbox, where the first instance in the first sandbox provides the first service for the first caller, and the second instance in the second sandbox provides the second service for the second caller. In this way, permission and data isolation is maintained between different instances by using the sandbox mechanism, and data security is further improved.

**S107:** The electronic device 100 initiates a third calling request, where the third calling request is used by the first caller to request the callee to provide a third service. If the electronic device 100 detects a first sandbox that is of the callee and that can provide a service for the first caller in the first sandbox, the electronic device 100 runs the first instance in the first sandbox, and provides the third service for the first caller in the first sandbox. In addition, the electronic device 100 records the current calling event that the first caller calls the first instance. For a specific process, refer to the description that the first caller calls the first instance in steps S101 to S105. Details are not described herein again.

Optionally, to maintain memory data isolation between the third service and the first service, or provide the third service and the first service in parallel, two first instances may be run in the first sandbox, and application data generated by the two first instances is isolated through directory identifiers based on different services.

The calling request from the second caller is the same as that in step S106. Details are not described herein again.

In addition, in a process of performing the foregoing step, the electronic device 100 may query permission information, and determine whether the first caller has permission to call the callee. If the first caller has permission to call the callee, the foregoing step is performed; or if the first caller does not have permission to call the callee, a result indicating that the first caller does not have the calling permission is returned to the first caller. Specifically, the permission information may be queried before any one of steps S101 to S107.

It should be noted that there is no sequence for initiating the three calling requests in steps S101 to S105, S106, and S107, and the three calling requests may be initiated in any sequence or simultaneously.

Before any one of steps S101 to S107, the electronic device 100 may query permission information of the first caller and the callee, determine whether the calling relationship or the calling permission indicates that the first caller has permission to access the callee and the first caller has permission to access the first service, and further determine whether the first instance is an instance that needs to be called by the first caller.

If it is found that the first caller does not have permission to call the first instance, the electronic device 100 may return the result indicating that the first caller does not have calling permission to the first caller, and the calling fails. In this step, permission confirmation is performed to prevent an application or a functional component that does not have permission to call the first instance from maliciously or incorrectly calling the first instance and accessing a resource of the first instance, to reduce security risks.

According to the method provided in Embodiment 1, when providing services for different callers, the callee separately runs different instances in different sandboxes, so that permission isolation between different instances can be ensured. Instances located in different sandboxes cannot access data of each other, thereby avoiding a problem that the callee abuses or misuses data of a caller, and ensuring data security.

In this embodiment, when the first caller initiates a different calling request to the callee, to request the callee to provide another service, the electronic device 100 may run a same instance in a same sandbox to provide the service. For example, in step S107, the first caller requests the callee to provide the third service. This is different from step S101 in which the first caller requests the callee to provide the first service. However, for the same first caller, the callee may run the same first instance in the first sandbox, and the first instance may provide the first service or the third service for the first caller in response to the first calling request or the third calling request. The electronic device stores the application data generated by the first service and the application data generated by the third service in the form of directories through the sandbox management module.

When the electronic device 100 runs an instance in a same sandbox, memory data corresponding to the instance is generated. When the electronic device 100 runs a plurality of instances in the same sandbox, the plurality of instances respectively correspond to a plurality of pieces of memory data. The plurality of pieces of memory data are isolated from each other and cannot access each other. In other words, the instances in the sandbox are isolated from each other.

In some embodiments, different devices may be distinguished through sandboxes. In other words, different callers on a same device may share a same sandbox. In an example, the electronic device 100 initiates a fourth calling request, where the fourth calling request may carry a third caller, a callee, and indication information of a fourth service, the third caller is installed in the electronic device 100, and the third caller is an application APP or a functional component. In response to the fourth calling request, the electronic device 100 runs the first instance in the first sandbox, where the first instance is further configured to provide the fourth service for the third caller. In this example, both the third caller and the first caller may call the first instance in the first sandbox.

### Embodiment 2

It may be understood that, the access control method provided in this application may alternatively be implemented between a plurality of electronic devices in a distributed system, and a caller that initiate a calling request and a callee may be deployed on different electronic devices.

After the devices in the distributed system establish a communication connection, each device synchronizes functional component information, APP information, and the like of other devices in the distributed system. Specifically, each device may synchronize an identifier of a functional component and/or an APP installed in the device and device information (for example, a device identifier) of the device to the distributed system to be seen by other devices, to facilitate subsequent mutual calling between the devices in the distributed system. Callers that can call each functional component or APP and another functional component or APP that can be called by each functional component or APP, that is, calling permission and/or called permission, may be preset and recorded on each electronic device, and synchronized to the distributed system.

This embodiment is described by using an example in which the caller and the callee are deployed on different electronic devices in the same distributed system.

In this embodiment, the caller that initiates the calling request is deployed on an electronic device 100, the callee is deployed on an electronic device 200, and the electronic device 100 and the electronic device 200 are located in the same distributed system.

Similarly, types of the caller and the callee are not limited in this embodiment. The type of the caller may include but is not limited to an APP, a PA, or an FA, and the type of the callee may include but is not limited to an APP, a PA, or an FA. For example, an APP may call a functional component PA/FA, a functional component PA/FA may also call another functional component PA/FA, an APP may also call another APP, and a functional component PA/FA may also call an APP.

A plurality of terminal devices in the same distributed system may synchronize information such as registration information and permission information of an APP, a PA, and an FA that are separately deployed, and a calling relationship between the APP, the PA, and the FA.

The registration information may be used to identify an application or a functional component, and may include information such as an identifier (APP ID) of the application or the functional component, an identifier (device ID) of the electronic device in which the application or the functional component is located, and an account identifier (account ID) of the electronic device in which the application or the functional component is located.

The permission information may include information such as calling/access permission and called/accessed permission of the application or the functional component.

For related descriptions of the calling relationship, refer to Embodiment 1. Details are not described herein.

The example provided in this embodiment does not constitute any limitation on other embodiments of this application.

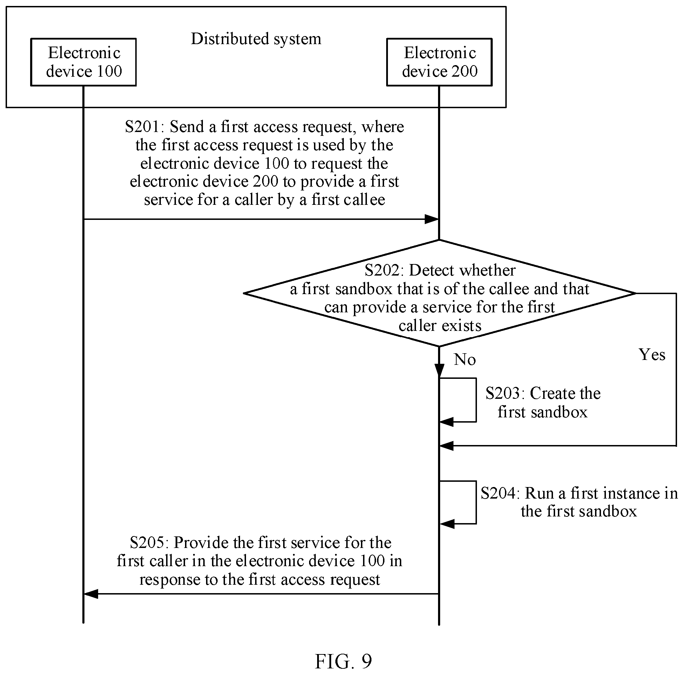

FIG. 9 is a flowchart of an access control method according to an embodiment of this application. The method specifically includes the following steps.

**S101:** The electronic device 100 sends a first access request to the electronic device 200, where the first access request is used by the electronic device 100 to request the electronic device 200 to provide a first service for a first caller by a callee.

The first caller is deployed on the electronic device 100, and the callee is deployed on the electronic device 200.

Before the electronic device 100 sends the first access request to the electronic device 200, the electronic device 100 may generate the first calling request, where the first calling request is that the first caller notifies the electronic device 100 that the first caller needs the callee to provide the first service.

A type, content, and the like of the first service are not limited in this embodiment of this application. For example, the first caller of the electronic device 100 requests the callee of the electronic device 200 to provide a first resource. The first resource may include a software resource (for example, a beauty algorithm, a positioning function, and an audio/video codec function) of the electronic device 200, or may include a hardware resource (for example, hardware such as a camera, an audio device, and a display).

The electronic device 100 may obtain, based on the first calling request, an identifier of the electronic device 200 in which the callee is located.

In some embodiments, the first calling request may include an identifier of the electronic device 100, an identifier of the first caller, the identifier of the electronic device 200, an identifier of the callee, and the like. The electronic device 100 may obtain, based on the first calling request, the identifier of the electronic device 200 in which the callee that needs to be called is located.

In some other embodiments, the first calling request does not include the identifier of the electronic device 200 in which the callee is located. In this case, after obtaining the identifier of the callee, the electronic device 100 may query, based on the identifier of the callee, synchronized registration information of the callee in the distributed system, to obtain the identifier of the electronic device 200. A manner in which the electronic device 100 obtains the identifier of the electronic device 200 is not limited in this embodiment.

After obtaining the identifier of the electronic device 200 in which the callee is located, the electronic device 100 may initiate a first access request to the electronic device 200, where the first access request may carry the ID of the electronic device 100, the ID of the electronic device 200, the ID of the first caller, the ID of the callee, an instruction for requesting the first service, and the like.

The electronic device 100 may initiate the first access request to the electronic device 200 in response to a received user operation, or may initiate the first access request to the electronic device 200 independently. This is not limited herein. In some embodiments, the electronic device 100 may display a user interface of the first caller, and may detect, through an input device such as a touch sensor, a user operation entered by a user in the user interface. The electronic device 100 may then initiate, in response to the user touch operation, the first calling request to the electronic device 200.

In some embodiments, the callee may be pre-installed in the electronic device 200. In some other embodiments, after receiving the first access request sent by the electronic device 100, the electronic device 200 may download and install the callee from the network, or may obtain, download, and install the callee from the electronic device 100 or another electronic device in the distributed system. This is not limited in this embodiment of this application.

In some embodiments, before the electronic device 100 sends the first access request to the electronic device 200, the electronic device 100 needs to determine that the first caller has permission to access the callee and that the first caller has permission to access the first service.

**S202:** After obtaining the first access request sent by the electronic device 100, the electronic device 200 detects whether a first sandbox that is of the callee and that can provide a service for the first caller exists, and if the first sandbox does not exist, performs step S203, or if the first sandbox exists, performs step S204.

In this embodiment, the callee may provide different instances in different sandboxes for different callers. Therefore, after obtaining the first access request, the electronic device 200 may first detect whether the first sandbox that is of the callee and that provides a service for the first caller of the electronic device 100 already exists.

Specifically, the electronic device 200 may determine, based on caller information in the first access request, whether the first sandbox exists, and cluster callers with the same caller information. The specific step is the same as step S102. Details are not described herein again.

**S203:** The electronic device 200 creates the first sandbox.

If no sandbox environment that can be called by the first caller of the electronic device 100 is detected, an instance creation module of the electronic device 200 may create a first sandbox that exclusively provides a service for the first caller of the electronic device 100, and bind the first sandbox to information about the first caller.

For a specific sandbox creation process, refer to step S103. Details are not described herein again.

**S204:** The electronic device 200 runs a first instance in the first sandbox.

The first instance of the callee is run in the environment of the first sandbox, and application data generated by the first instance of the callee is stored in an NVM of the first sandbox. For the case in which callers having same caller information share one sandbox in step S202, the electronic device 100 may create different instances or share a same instance in the first sandbox for different callers through an instance management module. For details, refer to step S1041 and step S1043. In addition, for the application data generated by the instance running in the sandbox, the electronic device 100 assigns, through a sandbox management module, different directory identifiers to callers having same caller information, and manages application data of different callers in a differentiated manner in the form of directory identifiers.

Before the instance is run, step S204 further includes a process of creating the first instance by the electronic device 200. For a specific process of creating the instance, refer to steps S1041 and S1042. Details are not described herein again.

**S205:** The electronic device 200 provides the first service for the first caller in the electronic device 100 in response to the first access request.

For a specific process of responding to the access request and reclaiming the resource after step S205, refer to step S105. Details are not described herein again.

Another electronic device in the distributed system may send a second request to the electronic device. For details, refer to the following step.

**S206:** An electronic device 300 initiates a second access request to the electronic device 200, where the second access request is used by the electronic device 300 to request the electronic device 200 to provide a second service for a second caller by the callee. The second caller is deployed on the electronic device 300, and the callee is deployed on the electronic device 200. If the electronic device 200 detects a second sandbox that is of the callee and that can provide a service for the second caller, the electronic device 200 runs the second instance in the second sandbox, to provide the second service for the second caller of the electronic device 300, and records the current calling event that the second caller of the electronic device 300 calls the second instance of the electronic device 200. For a specific process, refer to the description that the first caller of the electronic device 100 calls the first instance in the first sandbox of the electronic device 200 in steps S201 to S205. Details are not described herein again.

In some other embodiments, the second caller may also be deployed on the electronic device 100, or deployed on the electronic device 200.

In this embodiment, the callee may provide different services by running different corresponding instances in different sandboxes based on different callers. For example, the callee may create the first instance and the second instance, where the first instance provides the first service for the first caller, and the second instance provides the second service for the second caller. In this way, permission and data isolation is maintained between different instances through sandbox isolation, and data security is further improved.

**S207:** The electronic device 100 initiates a third access request to the electronic device 200, where the third access request is used by the electronic device 100 to request the electronic device 200 to provide a third service for the first caller by the callee. If the electronic device 200 detects the first sandbox that is of the callee and that can provide a service for the first caller, the electronic device 200 runs the first instance in the first sandbox, to provide the third service for the first caller of the electronic device 100, and records the current calling event that the first caller of the electronic device 100 calls the first instance of the electronic device 200. For a specific process, refer to the description that the first caller of the electronic device 100 calls the first sandbox of the electronic device 200 in steps S201 to S204. Details are not described herein again.

In this embodiment, when the first caller of the electronic device 100 initiates a different calling request to the callee of the electronic device 200, to request the callee to provide another service, the electronic device 200 runs a same instance in a same sandbox to provide the service. For example, in step S206, the first caller of the electronic device 100 requests the callee of the electronic device 200 to provide the third service. This is different from step S201 in which the first caller of the electronic device 100 requests the callee of the electronic device 200 to provide the first service. However, for the same first caller, the callee runs the same first instance, and the first instance may provide the first service or the third service for the first caller in response to the first calling request or the third calling request.

It should be noted that there is no sequence for initiating the three calling requests in steps S201 to S205, S206, and S207, and the three calling requests may be initiated in any sequence or simultaneously.

According to the method provided in Embodiment 2, when providing services for different callers, callees deployed on different electronic devices separately run different instances in different sandboxes, so that permission isolation between different instances can be ensured. Sandboxes cannot access memory data and application data of each other, thereby avoiding a problem that application data of a caller is abused or misused by a caller in a same sandbox, and ensuring data security.

Optionally, the electronic device 200 may create, in the first sandbox, a plurality of first instances for different services, and isolate, based on different services, application data generated by two first instances through directory identifiers.

The electronic device 100 may also be referred to as a first device, the electronic device 200 may also be referred to as a second device, and the electronic device 300 may also be referred to as a third device. The first access request may also be referred to as a first request, the second access request may also be referred to as a second request, and the third access request may also be referred to as a third request.

In some embodiments, different callers on a same device may share a same sandbox. In an example, the first device sends a fourth request to the second device, where the fourth request may carry a third caller, a callee, and indication information of a fourth service, the third caller is installed in the first device, and the third caller is an application APP or a functional component. In response to the fourth request, the second device runs the first instance in the first sandbox, where the first instance is further configured to provide the fourth service for the third caller. In this example, both the third caller and the first caller on the first device may call the first instance in the first sandbox.

In some embodiments, a same caller on different devices may share a same instance in a same sandbox. In an example, a fourth device initiates a fifth request to the second device, where the fifth request carries the first caller, the callee, and indication information of a fifth service, and the first caller is installed in the fourth device. In response to the fifth request, the second device runs the first instance in the first sandbox, where the first instance is further configured to provide the fifth service for the first caller of the fourth device. In this example, both the first caller on the first device and the first caller on the fourth device may call the first instance.

In some embodiments, a same caller on different devices may call different instances in a same sandbox. In an example, the first caller and the second caller are the same caller. In this example, the first caller of the first device may call the first instance in the first sandbox, and the first caller of the second device may call the second instance in the first sandbox, where the first instance is different from the second instance. The first sandbox distinguishes the application data of the first instance from that of the second instance through directory identifiers.

In some embodiments, different callers on a same device may call different instances in a same sandbox. In an example, the first device and the third device are the same device. In this example, the first caller of the first device may call the first instance in the first sandbox, and the second caller of the first device may call the second instance in the first sandbox, where the first instance is different from the second instance. The first sandbox distinguishes the application data of the first instance from that of the second instance through directory identifiers.

### Embodiment 3

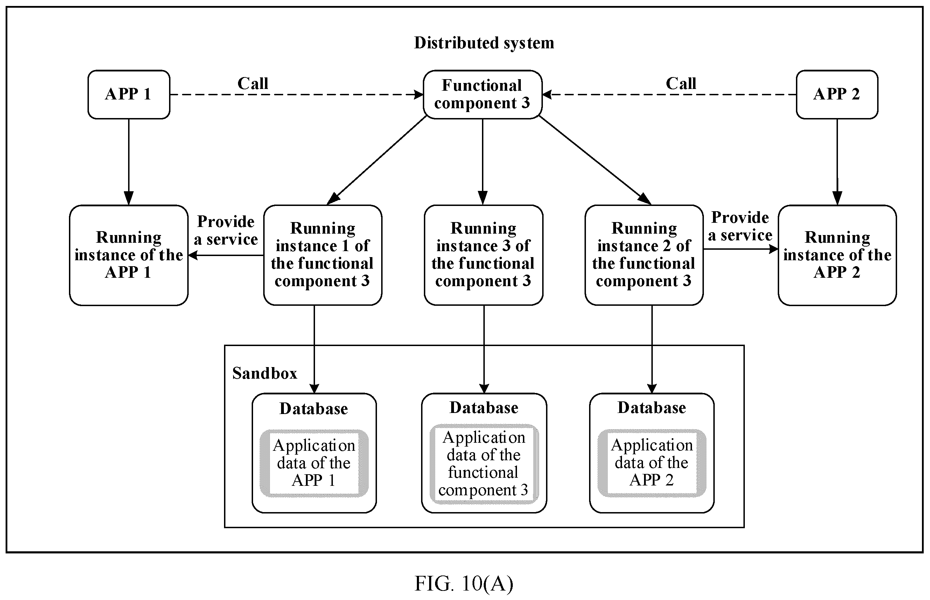

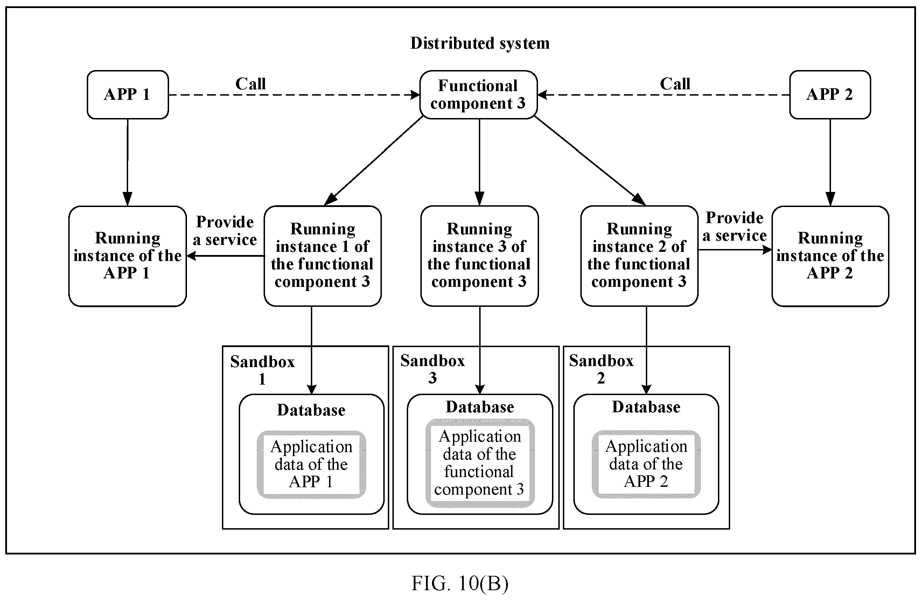

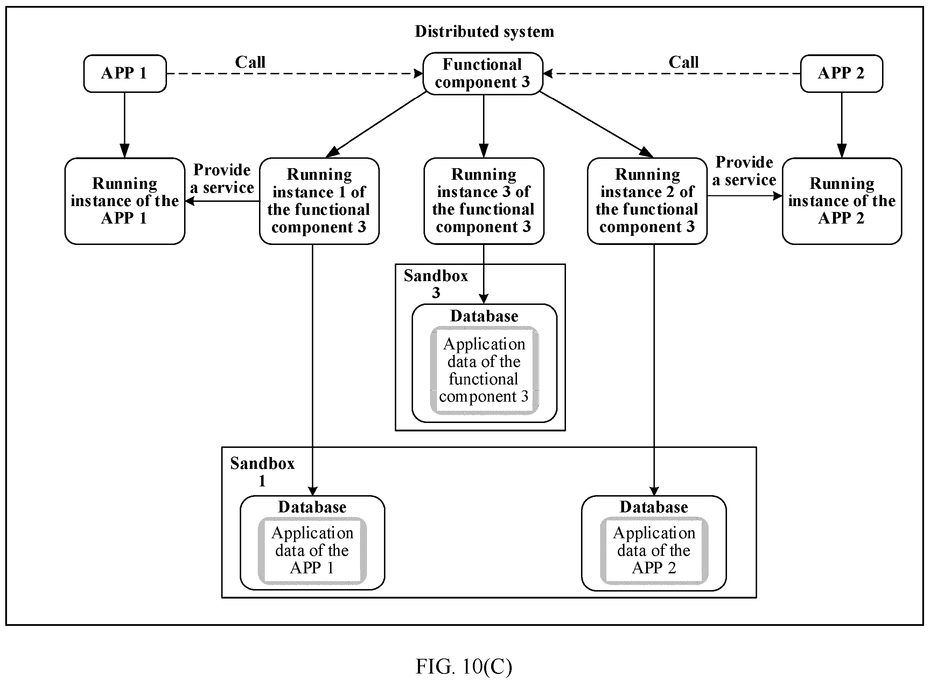

According to the access control method in Embodiment 1 and Embodiment 2, the electronic device runs different instances through different sandboxes to provide services for different callers. By using the sandbox mechanism, data isolation is maintained between different sandboxes. The data includes memory data and application data. Data security is ensured, especially security of application data. Based on this, in Embodiment 3, the sandbox mechanism is applied to application data isolation. A specific schematic diagram of a system structure is shown in FIG. 10.

In FIG. 10(A), different instances of a functional component 3 are run in an electronic device, services are provided for different callers through the different instances, and application data generated by the different instances is stored and managed through sandboxes. When the instances run, memory data is naturally isolated, and the application data is stored in the sandboxes. A sandbox management module is used to set different directory identifiers for different application data to manage the application data corresponding to different instances.

In FIG. 10(B), it is considered that there is still a security problem of a caller when data in a same sandbox is managed through a directory identifier, for example, an APP 1 may access application data with different directory identifiers in the sandbox through a functional component instance 1. In 10(B), different instances of the functional component 3 are run in the electronic device, services are provided for different callers through the different instances, and different sandboxes are created for the different instances to store and manage the application data generated by the different instances.

Further, considering that creating a sandbox occupies resources of the electronic device, excessive sandboxes cause overload of the electronic device, and resources in the sandbox are fixed after being created, the resources in the sandbox cannot be fully used in most cases. To solve the foregoing problem, a sandbox 1 and a sandbox 3 in FIG. 10(B) may be combined, and data of all callers is isolated from application data generated during running of the functional component 3, as shown in FIG. 10(C). In the caller data, application data generated by different callers is managed through directory identifiers.

For the foregoing cases in FIG. 10(A) and FIG. 10(C), a data hosting service module may be added to the internal module layer in FIG. 6. When different callers call instances, verification may be performed on validity of a caller and an operation of the caller through the data hosting service module. When the caller is valid and operates normally, a sandbox is scheduled to provide application data storage and reading services for an instance corresponding to the caller. As shown in FIG. 10(C), if the instance 1 that is of the functional component 3 and that provides a service for the APP 1 wants to access data under a directory identifier of the instance 2 of the functional component 3, the data hosting service module intercepts such an operation, to ensure security of application data in the sandbox.

The foregoing distributed system may be an independent electronic device, or may be one or more electronic devices in the distributed system. Various APPs and functional components may be installed in the electronic device. The example provided in this embodiment does not constitute any limitation on other embodiments of this application.

Types of the caller and the callee are not limited in this embodiment. The type of the caller may include but is not limited to an APP, a PA, or an FA, and the type of the callee may include but is not limited to an APP, a PA, or an FA. For example, an APP may call a functional component PA/FA, a functional component PA/FA may also call another functional component PA/FA, an APP may also call another APP, and a functional component PA/FA may also call an APP. For example, the caller may be a chat APP, and the callee may be a positioning PA that provides the positioning function. When the chat APP needs to obtain location information, the positioning PA needs to provide a positioning function service. In this case, the chat APP may initiate a calling request to the positioning PA.

The implementations described in the foregoing embodiments are merely examples for description, and do not constitute any limitation on other embodiments of this application. A specific internal implementation may vary based on different types of electronic devices, different operating systems, different used programs, and different called interfaces. This is not limited in embodiments of this application, provided that the feature functions described in embodiments of this application can be implemented.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that" or "in response to determining" or "when (a stated condition or event) is detected" or "in response to detecting (a stated condition or event)".

All or some of the foregoing embodiments may be implemented by using software, hardware, firmware, or any combination thereof. When software is used to implement the embodiments, all or a part of the embodiments may be implemented in the form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

The foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. An access control method, wherein the method is applied to a communication system (10), the communication system (10) comprises a first device (100), a second device (200), and a third device (300), a first caller is installed in the first device, a callee is installed in the second device, a second caller is installed in the third device, the first caller, the callee, and the second caller are applications or functional components, the application is a program entity implementing a plurality of functions, and the functional component is a program entity implementing a single function; and
the method comprises:
sending (S201), by the first device, a first request to the second device, wherein the first request carries the first caller, the callee, and indication information of a first service;
running (S204), by the second device in response to the first request, a first instance in a first sandbox, wherein the first instance is an instance of the callee, and the first instance is configured to provide (S205)the first service for the first caller;
sending, by the third device, a second request to the second device, wherein the second request carries the second caller, the callee, and indication information of a second service; and
running, by the second device in response to the second request, a second instance in a second sandbox, wherein the second instance is an instance of the callee, the second instance is configured to provide the second service to the second caller, and the second sandbox is different from the first sandbox;
initiating, by the first device, a third request to the second device, wherein the third request carries the first caller, the callee, and indication information of a third service; and
running, by the second device in response to the third request, the first instance in the first sandbox, wherein the first instance is further configured to provide the third service for the first caller; or running, by the second device in response to the third request, a third instance in the first sandbox, wherein the third instance is configured to provide the third service for the first caller.

2. The method according to claim 1, wherein the method further comprises:
initiating, by the first device, a fourth request to the second device, wherein the fourth request carries a third caller, the callee, and indication information of a fourth service, the third caller is installed in the first device, and the third caller is an application, APP or a functional component; and
running, by the second device in response to the fourth request, the first instance in the first sandbox, wherein the first instance is further configured to provide the fourth service for the third caller; or running, by the second device in response to the fourth request, the third instance in the first sandbox, wherein the third instance is configured to provide the fourth service for the third caller.

3. The method according to any one of claims 1 to 2, wherein the method further comprises:
initiating, by a fourth device, a fifth request to the second device, wherein the fifth request carries the first caller, the callee, and indication information of a fifth service, and the first caller is installed in the fourth device; and
running, by the second device in response to the fifth request, the first instance in the first sandbox, wherein the first instance is further configured to provide the fifth service for the first caller of the fourth device, or running, by the second device in response to the fifth request, the third instance in the first sandbox, wherein the third instance is configured to provide the fourth service for the third caller.

4. The method according to any one of claims 1 to 3, wherein the first caller and the second caller are the same.

5. The method according to any one of claims 1 to 4, wherein the first device and the third device are the same device.

6. An access control method, wherein the method is applied to a second device (200), the second device is located in a communication system (10), the communication system (10) comprises a first device (100), the second device (200), and a third device (300), a first caller is installed in the first device, a callee is installed in the second device, a second caller is installed in the third device, the first caller, the callee, and the second caller are applications or functional components, the application is a program entity implementing a plurality of functions, and the functional component is a program entity implementing a single function; and
the method comprises:
receiving (S201), by the second device (200), a first request sent by the first device (100), wherein the first request carries the first caller, the callee, and indication information of a first service;
running (S204), by the second device (200) in response to the first request, a first instance in a first sandbox, wherein the first instance is an instance of the callee, and the first instance is configured to provide the first service for the first caller;
receiving, by the second device (200), a second request sent by the third device (300), wherein the second request carries the second caller, the callee, and indication information of a second service; and
running, by the second device (200) in response to the second request, a second instance in a second sandbox, wherein the second instance is an instance of the callee, the second instance is configured to provide the second service to the second caller, and the second sandbox is different from the first sandbox; and
receiving, by the second device, a third request sent by the first device, wherein the third request carries the first caller, the callee, and indication information of a third service; and
running, by the second device in response to the third request, the first instance in the first sandbox, wherein the first instance is further configured to provide the third service for the first caller; or running, by the second device in response to the third request, a third instance in the first sandbox, wherein the third instance is configured to provide the third service for the first caller.

7. The method according to claim 6, wherein the method further comprises:
receiving, by the second device, a fourth request sent by the first device, wherein the fourth request carries a third caller, the callee, and indication information of a fourth service, the third caller is installed in the first device, and the third caller is an application APP or a functional component; and
running, by the second device in response to the fourth request, the first instance in the first sandbox, wherein the first instance is further configured to provide the fourth service for the third caller; or running, by the second device in response to the fourth request, the third instance in the first sandbox, wherein the third instance is configured to provide the fourth service for the third caller.

8. The method according to any one of claims 6 to 7, wherein the method further comprises:
receiving, by the second device, a fifth request sent by a fourth device, wherein the fifth request carries the first caller, the callee, and indication information of a fifth service, and the first caller is installed in the fourth device; and
running, by the second device in response to the fifth request, the first instance in the first sandbox, wherein the first instance is further configured to provide the fifth service for the first caler of the fourth device, or running, by the second device in response to the fifth request, the third instance in the first sandbox, wherein the third instance is configured to provide the fourth service for the third caller.

9. The method according to any one of claims 6 to 8, wherein the first caller and the second caller are the same.

10. The method according to any one of claims 6 to 9, wherein the first device and the third device are the same device.

11. An electronic device (100, 200, 300), wherein the electronic device (100, 200, 300) comprises a communication apparatus, a memory (121), a processor (110) coupled to the memory (121), a plurality of applications, and one or more programs, the memory (121) stores computer executable instructions, and when the processor (110) executes the instructions, the electronic device (100, 200, 300) is enabled to implement the method according to any one of claims 6 to 10.

12. A communication system (10), wherein the communication system (10) comprises a first device, a second device, and a third device, and the first device, the second device, and the third device cooperate to perform the method according to any one of claims 1 to 5.

13. A computer-readable storage medium, comprising instructions, wherein when the instructions are run on an electronic device (100, 200, 300), the electronic device (100, 200, 300) is enabled to perform the method according to any one of claims 1 to 10.

## Patentansprüche

1. Zugangssteuerungsverfahren, wobei das Verfahren auf ein Kommunikationssystem (10) angewendet wird, das Kommunikationssystem (10) eine erste Vorrichtung (100), eine zweite Vorrichtung (200) und eine dritte Vorrichtung (300) umfasst, ein erster Aufrufer auf der ersten Vorrichtung installiert ist, ein Aufgerufener auf der zweiten Vorrichtung installiert ist, ein zweiter Aufrufer auf der dritten Vorrichtung installiert ist, der erste Aufrufer, der Aufgerufene und der zweite Aufrufer Anwendungen oder funktionale Komponenten sind, die Anwendung eine Programmeinheit ist, die eine Vielzahl von Funktionen implementiert, und die funktionale Komponente eine Programmeinheit ist, die eine einzelne Funktion implementiert; und
das Verfahren Folgendes umfasst:
Senden (S201), durch die erste Vorrichtung, einer ersten Anfrage an die zweite Vorrichtung, wobei die erste Anfrage den ersten Aufrufer, den Aufgerufenen und Anzeigeinformationen eines ersten Dienstes enthält;
Betreiben (S204) einer ersten Instanz in einer ersten Sandbox durch die zweite Vorrichtung als Reaktion auf die erste Anfrage, wobei die erste Instanz eine Instanz des Aufgerufenen ist und die erste Instanz dazu konfiguriert ist, den ersten Dienst für den ersten Aufrufer bereitzustellen (S205);
Senden, durch die dritte Vorrichtung, einer zweiten Anfrage an die zweite Vorrichtung, wobei die zweite Anfrage den zweiten Aufrufer, den Aufgerufenen und Anzeigeinformationen eines zweiten Dienstes enthält; und
Betreiben einer zweiten Instanz in einer zweiten Sandbox durch die zweite Vorrichtung als Reaktion auf die zweite Anfrage, wobei die zweite Instanz eine Instanz des Aufgerufenen ist, die zweite Instanz dazu konfiguriert ist, den zweiten Dienst für den zweiten Aufrufer bereitzustellen, und die zweite Sandbox sich von der ersten Sandbox unterscheidet;
Initiieren einer dritten Anfrage an die zweite Vorrichtung durch die erste Vorrichtung, wobei die dritte Anfrage den ersten Aufrufer, den Aufgerufenen und Anzeigeinformationen eines dritten Dienstes enthält; und
Betreiben der ersten Instanz in der ersten Sandbox durch die zweite Vorrichtung als Reaktion auf die dritte Anfrage, wobei die erste Instanz ferner dazu konfiguriert ist, den dritten Dienst für den ersten Aufrufer bereitzustellen; oder Betreiben einer dritten Instanz in der ersten Sandbox durch die zweite Vorrichtung als Reaktion auf die dritte Anfrage, wobei die dritte Instanz dazu konfiguriert ist, den dritten Dienst für den ersten Aufrufer bereitzustellen.

2. Verfahren nach Anspruch 1, wobei das Verfahren ferner Folgendes umfasst:
Initiieren einer vierten Anfrage an die zweite Vorrichtung durch die erste Vorrichtung, wobei die vierte Anfrage einen dritten Aufrufer, den Aufgerufenen und Anzeigeinformationen eines vierten Dienstes enthält, der dritte Aufrufer auf der ersten Vorrichtung installiert ist und der dritte Aufrufer eine Anwendung, APP, oder eine funktionale Komponente ist; und
Betreiben der ersten Instanz in der ersten Sandbox durch die zweite Vorrichtung als Reaktion auf die vierte Anfrage, wobei die erste Instanz ferner dazu konfiguriert ist, den vierten Dienst für den dritten Aufrufer bereitzustellen; oder Betreiben der dritten Instanz in der ersten Sandbox durch die zweite Vorrichtung als Reaktion auf die vierte Anfrage, wobei die dritte Instanz dazu konfiguriert ist, den vierten Dienst für den dritten Aufrufer bereitzustellen.

3. Verfahren nach einem der Ansprüche 1 bis 2, wobei das Verfahren ferner Folgendes umfasst:
Initiieren einer fünften Anfrage an die zweite Vorrichtung durch eine vierte Vorrichtung, wobei die fünfte Anfrage den ersten Aufrufer, den Aufgerufenen und Anzeigeinformationen eines fünften Dienstes enthält und der erste Aufrufer auf der vierten Vorrichtung installiert ist; und
Betreiben der ersten Instanz in der ersten Sandbox durch die zweite Vorrichtung als Reaktion auf die fünfte Anfrage, wobei die erste Instanz ferner dazu konfiguriert ist, den fünften Dienst für den ersten Aufrufer der vierten Vorrichtung bereitzustellen, oder Betreiben der dritten Instanz in der ersten Sandbox durch die zweite Vorrichtung als Reaktion auf die fünfte Anfrage, wobei die dritte Instanz dazu konfiguriert ist, den vierten Dienst für den dritten Aufrufer bereitzustellen.

4. Verfahren nach einem der Ansprüche 1 bis 3, wobei der erste Aufrufer und der zweite Aufrufer gleich sind.

5. Verfahren nach einem der Ansprüche 1 bis 4, wobei die erste Vorrichtung und die dritte Vorrichtung die gleiche Vorrichtung sind.

6. Zugangssteuerungsverfahren, wobei das Verfahren auf eine zweite Vorrichtung (200) angewendet wird, sich die zweite Vorrichtung in einem Kommunikationssystem (10) befindet, das Kommunikationssystem (10) eine erste Vorrichtung (100), die zweite Vorrichtung (200) und eine dritte Vorrichtung (300) umfasst, ein erster Aufrufer auf der ersten Vorrichtung installiert ist, ein Aufgerufener auf der zweiten Vorrichtung installiert ist, ein zweiter Aufrufer auf der dritten Vorrichtung installiert ist, der erste Aufrufer, der Aufgerufene und der zweite Aufrufer Anwendungen oder funktionale Komponenten sind, die Anwendung eine Programmeinheit ist, die eine Vielzahl von Funktionen implementiert, und die funktionale Komponente eine Programmeinheit ist, die eine einzelne Funktion implementiert; und
das Verfahren Folgendes umfasst:
Empfangen (S201), durch die zweite Vorrichtung (200), einer ersten Anfrage, die durch die erste Vorrichtung (100) gesendet wird, wobei die erste Anfrage den ersten Aufrufer, den Aufgerufenen und Anzeigeinformationen eines ersten Dienstes enthält;
Betreiben (S204) einer ersten Instanz in einer ersten Sandbox durch die zweite Vorrichtung (200) als Reaktion auf die erste Anfrage, wobei die erste Instanz eine Instanz des Aufgerufenen ist und die erste Instanz dazu konfiguriert ist, den ersten Dienst für den ersten Aufrufer bereitzustellen;
Empfangen, durch die zweite Vorrichtung (200), einer zweiten Anfrage, die durch die dritte Vorrichtung (300) gesendet wird, wobei die zweite Anfrage den zweiten Aufrufer, den Aufgerufenen und Anzeigeinformationen eines zweiten Dienstes enthält; und
Betreiben einer zweiten Instanz in einer zweiten Sandbox durch die zweite Vorrichtung (200) als Reaktion auf die zweite Anfrage, wobei die zweite Instanz eine Instanz des Aufgerufenen ist, die zweite Instanz dazu konfiguriert ist, den zweiten Dienst für den zweiten Aufrufer bereitzustellen, und die zweite Sandbox sich von der ersten Sandbox unterscheidet; und
Empfangen, durch die zweite Vorrichtung, einer dritten Anfrage, die durch die erste Vorrichtung gesendet wird, wobei die dritte Anfrage den ersten Aufrufer, den Aufgerufenen und Anzeigeinformationen eines dritten Dienstes enthält; und
Betreiben der ersten Instanz in der ersten Sandbox durch die zweite Vorrichtung als Reaktion auf die dritte Anfrage, wobei die erste Instanz ferner dazu konfiguriert ist, den dritten Dienst für den ersten Aufrufer bereitzustellen; oder Betreiben einer dritten Instanz in der ersten Sandbox durch die zweite Vorrichtung als Reaktion auf die dritte Anfrage, wobei die dritte Instanz dazu konfiguriert ist, den dritten Dienst für den ersten Aufrufer bereitzustellen.

7. Verfahren nach Anspruch 6, wobei das Verfahren ferner Folgendes umfasst:
Empfangen, durch die zweite Vorrichtung, einer vierten Anfrage, die durch die erste Vorrichtung gesendet wird, wobei die vierte Anfrage einen dritten Aufrufer, den Aufgerufenen und Anzeigeinformationen eines vierten Dienstes enthält, der dritte Aufrufer auf der ersten Vorrichtung installiert ist und der dritte Aufrufer eine Anwendung, APP, oder eine funktionale Komponente ist; und
Betreiben der ersten Instanz in der ersten Sandbox durch die zweite Vorrichtung als Reaktion auf die vierte Anfrage, wobei die erste Instanz ferner dazu konfiguriert ist, den vierten Dienst für den dritten Aufrufer bereitzustellen; oder Betreiben der dritten Instanz in der ersten Sandbox durch die zweite Vorrichtung als Reaktion auf die vierte Anfrage, wobei die dritte Instanz dazu konfiguriert ist, den vierten Dienst für den dritten Aufrufer bereitzustellen.

8. Verfahren nach einem der Ansprüche 6 bis 7, wobei das Verfahren ferner Folgendes umfasst:
Empfangen, durch die zweite Vorrichtung, einer fünften Anfrage, die durch eine vierte Vorrichtung gesendet wird, wobei die fünfte Anfrage den ersten Aufrufer, den Aufgerufenen und Anzeigeinformationen eines fünften Dienstes enthält und der erste Aufrufer auf der vierten Vorrichtung installiert ist; und
Betreiben der ersten Instanz in der ersten Sandbox durch die zweite Vorrichtung als Reaktion auf die fünfte Anfrage, wobei die erste Instanz ferner dazu konfiguriert ist, den fünften Dienst für den ersten Aufrufer der vierten Vorrichtung bereitzustellen, oder Betreiben der dritten Instanz in der ersten Sandbox durch die zweite Vorrichtung als Reaktion auf die fünfte Anfrage, wobei die dritte Instanz dazu konfiguriert ist, den vierten Dienst für den dritten Aufrufer bereitzustellen.

9. Verfahren nach einem der Ansprüche 6 bis 8, wobei der erste Aufrufer und der zweite Aufrufer gleich sind.

10. Verfahren nach einem der Ansprüche 6 bis 9, wobei die erste Vorrichtung und die dritte Vorrichtung die gleiche Vorrichtung sind.

11. Elektronische Vorrichtung (100, 200, 300), wobei die elektronische Vorrichtung (100, 200, 300) eine Kommunikationseinrichtung, einen Speicher (121), einen mit dem Speicher (121) gekoppelten Prozessor (110), eine Vielzahl von Anwendungen und ein oder mehrere Programme umfasst, der Speicher (121) computerausführbare Anweisungen speichert und, wenn der Prozessor (110) die Anweisungen ausführt, die elektronische Vorrichtung (100, 200, 300) in die Lage versetzt wird, das Verfahren nach einem der Ansprüche 6 bis 10 zu implementieren.

12. Kommunikationssystem (10), wobei das Kommunikationssystem (10) eine erste Vorrichtung, eine zweite Vorrichtung und eine dritte Vorrichtung umfasst und die erste Vorrichtung, die zweite Vorrichtung und die dritte Vorrichtung zusammenwirken, um das Verfahren nach einem der Ansprüche 1 bis 5 durchzuführen.

13. Computerlesbares Speichermedium, umfassend Anweisungen, wobei, wenn die Anweisungen auf einer elektronischen Vorrichtung (100, 200, 300) betrieben werden, die elektronische Vorrichtung (100, 200, 300) in die Lage versetzt wird, das Verfahren nach einem der Ansprüche 1 bis 10 durchzuführen.

## Revendications

1. Procédé de contrôle d'accès, dans lequel le procédé est appliqué à un système de communication (10), le système de communication (10) comprend un premier dispositif (100), un deuxième dispositif (200) et un troisième dispositif (300), un premier appelant est installé dans le premier dispositif, un appelé est installé dans le deuxième dispositif, un deuxième appelant est installé dans le troisième dispositif, le premier appelant, l'appelé et le deuxième appelant sont des applications ou des composants fonctionnels, l'application est une entité de programme mettant en œuvre une pluralité de fonctions, et le composant fonctionnel est une entité de programme mettant en œuvre une seule fonction ; et
le procédé comprend :
l'envoi (S201), par le premier dispositif, d'une première requête au deuxième dispositif, dans lequel la première requête contient le premier appelant, l'appelé et des informations d'indication d'un premier service ;
l'exécution (S204), par le deuxième dispositif en réponse à la première requête, d'une première instance dans un premier bac à sable, dans lequel la première instance est une instance de l'appelé, et la première instance est configurée pour fournir (S205) le premier service pour le premier appelant ;
l'envoi, par le troisième dispositif, d'une deuxième requête au deuxième dispositif, dans lequel la deuxième requête contient le deuxième appelant, l'appelé et des informations d'indication d'un deuxième service ; et
l'exécution, par le deuxième dispositif en réponse à la deuxième requête, d'une deuxième instance dans un second bac à sable, dans lequel la deuxième instance est une instance de l'appelé, la deuxième instance est configurée pour fournir le deuxième service au deuxième appelant, et le second bac à sable est différent du premier bac à sable ;
l'initiation, par le premier dispositif, d'une troisième requête au deuxième dispositif, dans lequel la troisième requête contient le premier appelant, l'appelé et des informations d'indication d'un troisième service ; et
l'exécution, par le deuxième dispositif en réponse à la troisième requête, de la première instance dans le premier bac à sable, dans lequel la première instance est en outre configurée pour fournir le troisième service pour le premier appelant ; ou
l'exécution, par le deuxième dispositif en réponse à la troisième requête, d'une troisième instance dans le premier bac à sable, dans lequel la troisième instance est configurée pour fournir le troisième service pour le premier appelant.

2. Procédé selon la revendication 1, dans lequel le procédé comprend en outre :
l'initiation, par le premier dispositif, d'une quatrième requête au deuxième dispositif, dans lequel la quatrième requête contient un troisième appelant, l'appelé et des informations d'indication d'un quatrième service, le troisième appelant est installé dans le premier dispositif et le troisième appelant est une application, APP, ou un composant fonctionnel ; et
l'exécution, par le deuxième dispositif en réponse à la quatrième requête, de la première instance dans le premier bac à sable, dans lequel la première instance est en outre configurée pour fournir le quatrième service pour le troisième appelant ;
ou l'exécution, par le deuxième dispositif en réponse à la quatrième requête, de la troisième instance dans le premier bac à sable, dans lequel la troisième instance est configurée pour fournir le quatrième service pour le troisième appelant.

3. Procédé selon l'une quelconque des revendications 1 et 2, dans lequel le procédé comprend en outre :
l'initiation, par un quatrième dispositif, d'une cinquième requête au deuxième dispositif, dans lequel la cinquième requête contient le premier appelant, l'appelé et des informations d'indication d'un cinquième service, et le premier appelant est installé dans le quatrième dispositif ; et
l'exécution, par le deuxième dispositif en réponse à la cinquième requête, de la première instance dans le premier bac à sable, dans lequel la première instance est en outre configurée pour fournir le cinquième service pour le premier appelant du quatrième dispositif, ou l'exécution, par le deuxième dispositif en réponse à la cinquième requête, de la troisième instance dans le premier bac à sable, dans lequel la troisième instance est configurée pour fournir le quatrième service pour le troisième appelant.

4. Procédé selon l'une quelconque des revendications 1 à 3, dans lequel le premier appelant et le deuxième appelant sont les mêmes.

5. Procédé selon l'une quelconque des revendications 1 à 4, dans lequel le premier dispositif et le troisième dispositif sont le même dispositif.

6. Procédé de contrôle d'accès, dans lequel le procédé est appliqué à un deuxième dispositif (200), le deuxième dispositif est situé dans un système de communication (10), le système de communication (10) comprend un premier dispositif (100), le deuxième dispositif (200) et un troisième dispositif (300), un premier appelant est installé dans le premier dispositif, un appelé est installé dans le deuxième dispositif, un deuxième appelant est installé dans le troisième dispositif, le premier appelant, l'appelé et le deuxième appelant sont des applications ou des composants fonctionnels, l'application est une entité de programme mettant en œuvre une pluralité de fonctions, et le composant fonctionnel est une entité de programme mettant en œuvre une seule fonction ; et
le procédé comprend :
la réception (S201), par le deuxième dispositif (200), d'une première requête envoyée par le premier dispositif (100), dans lequel la première requête contient le premier appelant, l'appelé et des informations d'indication d'un premier service ;
l'exécution (S204), par le deuxième dispositif (200) en réponse à la première requête, d'une première instance dans un premier bac à sable, dans lequel la première instance est une instance de l'appelé, et la première instance est configurée pour fournir le premier service pour le premier appelant ;
la réception, par le deuxième dispositif (200), d'une deuxième requête envoyée par le troisième dispositif (300), dans lequel la deuxième requête contient le deuxième appelant, l'appelé et des informations d'indication d'un deuxième service ; et
l'exécution, par le deuxième dispositif (200) en réponse à la deuxième requête, d'une deuxième instance dans un second bac à sable, dans lequel la deuxième instance est une instance de l'appelé, la deuxième instance est configurée pour fournir le deuxième service au deuxième appelant, et le second bac à sable est différent du premier bac à sable ; et
la réception, par le deuxième dispositif, d'une troisième requête envoyée par le premier dispositif, dans lequel la troisième requête contient le premier appelant, l'appelé et des informations d'indication d'un troisième service ; et
l'exécution, par le deuxième dispositif en réponse à la troisième requête, de la première instance dans le premier bac à sable, dans lequel la première instance est en outre configurée pour fournir le troisième service pour le premier appelant ; ou
l'exécution, par le deuxième dispositif en réponse à la troisième requête, d'une troisième instance dans le premier bac à sable, dans lequel la troisième instance est configurée pour fournir le troisième service pour le premier appelant.

7. Procédé selon la revendication 6, dans lequel le procédé comprend en outre :
la réception, par le deuxième dispositif, d'une quatrième requête envoyée par le premier dispositif, dans lequel la quatrième requête contient un troisième appelant, l'appelé et des informations d'indication d'un quatrième service, le troisième appelant est installé dans le premier dispositif et le troisième appelant est une application, APP, ou un composant fonctionnel ; et
l'exécution, par le deuxième dispositif en réponse à la quatrième requête, de la première instance dans le premier bac à sable, dans lequel la première instance est en outre configurée pour fournir le quatrième service pour le troisième appelant ;
ou l'exécution, par le deuxième dispositif en réponse à la quatrième requête, de la troisième instance dans le premier bac à sable, dans lequel la troisième instance est configurée pour fournir le quatrième service pour le troisième appelant.

8. Procédé selon l'une quelconque des revendications 6 et 7, dans lequel le procédé comprend en outre :
la réception, par le deuxième dispositif, d'une cinquième requête envoyée par un quatrième dispositif, dans lequel la cinquième requête contient le premier appelant, l'appelé et des informations d'indication d'un cinquième service, et le premier appelant est installé dans le quatrième dispositif ; et
l'exécution, par le deuxième dispositif en réponse à la cinquième requête, de la première instance dans le premier bac à sable, dans lequel la première instance est en outre configurée pour fournir le cinquième service pour le premier appelant du quatrième dispositif, ou l'exécution, par le deuxième dispositif en réponse à la cinquième requête, de la troisième instance dans le premier bac à sable, dans lequel la troisième instance est configurée pour fournir le quatrième service pour le troisième appelant.

9. Procédé selon l'une quelconque des revendications 6 à 8, dans lequel le premier appelant et le deuxième appelant sont les mêmes.

10. Procédé selon l'une quelconque des revendications 6 à 9, dans lequel le premier dispositif et le troisième dispositif sont le même dispositif.

11. Dispositif électronique (100, 200, 300), dans lequel le dispositif électronique (100, 200, 300) comprend un appareil de communication, une mémoire (121), un processeur (110) couplé à la mémoire (121), une pluralité d'applications et un ou plusieurs programmes, la mémoire (121) stocke des instructions exécutables par ordinateur, et lorsque le processeur (110) exécute les instructions, le dispositif électronique (100, 200, 300) est activé pour mettre en œuvre le procédé selon l'une quelconque des revendications 6 à 10.

12. Système de communication (10), dans lequel le système de communication (10) comprend un premier dispositif, un deuxième dispositif et un troisième dispositif, et le premier dispositif, le deuxième dispositif et le troisième dispositif coopèrent pour réaliser le procédé selon l'une quelconque des revendications 1 à 5.

13. Support de stockage lisible par ordinateur, comprenant des instructions, dans lequel, lorsque les instructions sont exécutées sur un dispositif électronique (100, 200, 300), le dispositif électronique (100, 200, 300) est activé pour réaliser le procédé selon l'une quelconque des revendications 1 à 10.
